# EUROPÄISCHE PATENTSCHRIFT

(11) **EP 3 735 745 B1**
(45) Veröffentlichungstag und Bekanntmachung des Hinweises auf die Patenterteilung: **03.05.2023**
(21) Anmeldenummer: 20701763.3
(22) Anmeldetag: 24.01.2020
(51) Int. Cl.: H03M 1/12, H04W 12/08, H04W 12/122, H04L 7/033, H04W 12/61, H04W 12/63

(54) **VERFAHREN ZUR ERKENNUNG DES ZEITPUNKTS DES FRÜHESTEN EMPFANGS EINER SIGNALÄNDERUNG, INSBESONDERE ZUR LAUFZEITMESSUNG ODER ZUR ABWEHR VON RELAYANGRIFFEN**
METHOD FOR DETECTING THE MOMENT OF THE EARLIEST RECEPTION OF A SIGNAL CHANGE
PROCÉDÉ DE DÉTECTION DE L'INSTANT DE LA RÉCEPTION ANTÉRIEURE D'UN CHANGEMENT DE SIGNAL

(30) Priorität: 28.01.2019 EP 19153918
(43) Veröffentlichungstag der Anmeldung: 11.11.2020
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2020/051736
(87) Internationale Veröffentlichungsnummer: WO 2020/156939

(56) Entgegenhaltungen:
- EP-A1- 3 098 626
- HAN HONG GUL ET AL: "A 1.9-mm-Precision 20-GHz Direct-Sampling Receiver Using Time-Extension Method for Indoor Localization", IEEE JOURNAL OF SOLID-STATE CIRCUITS, IEEE SERVICE CENTER, PISCATAWAY, NJ, USA, Bd. 52, Nr. 6, Juni 2017 (2017-06), Seiten 1509-1520, XP011649813, ISSN: 0018-9200, DOI: 10.1109/JSSC.2017.2679068 [gefunden am 2017-05-24]
- SONG HAIXIN ET AL: "A Secure TOF-Based Transceiver with Low Latency and sub-cm Ranging for Mobile Authentication Applications", 2018 IEEE RADIO FREQUENCY INTEGRATED CIRCUITS SYMPOSIUM (RFIC), IEEE, 10. Juni 2018 (2018-06-10), Seiten 160-163, XP033383086, DOI: 10.1109/RFIC.2018.8429022 [gefunden am 2018-08-07]
- GERHARD P HANCKE ET AL: "Attacks on time-of-flight distance bounding channels", WISEC'08, ACM, ALEXANDRIA, VIRGINIA, USA, 31. März 2008 (2008-03-31), Seiten 194-202, XP058334477, DOI: 10.1145/1352533.1352566 ISBN: 978-1-59593-814-5
- RANGANATHAN AANJHAN ET AL: "Are We Really Close? Verifying Proximity in Wireless Systems", SECURITY & PRIVACY, IEEE, Bd. 15, Nr. 3, Juni 2017 (2017-06), Seiten 52-58, XP011652630, ISSN: 1540-7993, DOI: 10.1109/MSP.2017.56 [gefunden am 2017-06-09]
- Anonymous: "Datenübertragung - Wikipedia", , 4. Dezember 2018 (2018-12-04), XP55711367, Gefunden im Internet: URL:https://de.wikipedia.org/w/index.php?t itle=Datenübertragung&oldid=183392778 [gefunden am 2020-07-02]
- Anonymous: "Code - Wikipedia", , 14. Januar 2019 (2019-01-14), XP55711369, Gefunden im Internet: URL:https://de.wikipedia.org/w/index.php?t itle=Code&oldid=184719423 [gefunden am 2020-07-02]
- HAN HONG GUL ET AL: "A 1.9-mm-Precision 20-GHz Direct-Sampling Receiver Using Time-Extension Method for Indoor Localization", IEEE JOURNAL OF SOLID-STATE CIRCUITS, IEEE, USA, vol. 52, no. 6, 1 June 2017 (2017-06-01), pages 1509-1520, XP011649813, ISSN: 0018-9200, DOI: 10.1109/JSSC.2017.2679068 [retrieved on 2017-05-24]

## Beschreibung

Die vorliegende Erfindung befasst sich mit der Erkennung des Zeitpunkts des frühesten Empfangs einer Signaländerung. Sie betrifft ein Verfahren nach dem unabhängigen Anspruch 1, eine Anwendung nach dem unabhängigen Anspruch 14 und ein Übertragungssystem nach dem unabhängigen Anspruch 15.

Ein bekannter Ansatz besteht darin, eine Abtastung der empfangenen Impulse in kleineren und genaueren Schritten durchzuführen. Hierzu wird zur besseren Abtastung von empfangenen Impulsen beispielsweise in Han et al.,. A 1.9-mm-Precision 20-GHz Direct-Sampling Receiver Using Time-Extension Method for Indoor Localization. IEEE Journal of Solid-State Circuits. Juni 2017, Vol. 52, No. 6, Seiten 1509-1520, DOI 10.1 109/JSSC.2017.2679068 eine neue Methode vorgeschlagen, nämlich die direkte Abtastung mit Zeitverlängerung, bei welcher eine hoch-zeitaufgelöste Abtastung während der kurzen Pulse erfolgt und die Analyse dieser abgetasteten Pulse zwischen den Pulsen stattfindet. Auch wurde in Song et al.,. A Secure TOF-Based Transceiver with Low Latency and sub-cm Ranging for Mobile Authentication Applications. IEEE Radio Frequency Integrated Circuits Symposium. Juni 2018, Seiten 160-163. DOI 10.1 109/RFIC.2018.8429022 vorgeschlagen, eine Authentifizierung mittels einer Umlaufzeit eines Impulssignals durch eine binäre Phasenumtastung und Pulsphasenmodulation von empfangenen und wieder zu versendenden Impulsen zu verbessern.

Weiterhin sind digitale Übertragungssysteme bekannt, die Informationen in Symbole und/oder Chips codiert und übertragen, beispielsweise Bluetooth, UMTS oder LTE. Dabei werden, je nach zu übertragenen Daten, aufeinanderfolgend jeweils entweder (selten) die gleichen oder (meistens) voneinander abweichende Symbole oder Chips übertragen, so dass sich ein Strom übertragendere Symbole und/oder Chips ergibt. Die Symbole und/oder Chips werden jeweils innerhalb von Symbol- und/oder Chipperioden übertragen. Die Übertragung eines Symbols oder Chips nimmt eine meist vorbestimmte Zeitdauer in Anspruch, in der nachfolgenden Symbol- oder Chipperiode kann dann das nächste Symbol oder der nächste Chip übertragen werden. Das empfangene Signal wird aber in der Regel allein verwendet, um die darin codierte Information zu decodieren. Zu diesem Zweck werden in solchen Systemen Verfahren zur teilweisen und/oder nicht exakten Zeitsynchronisierung der an der Übertragung beteiligten Objekte, insbesondere Sender und/oder Empfänger, verwendet, insbesondere damit der Empfänger zumindest mit einer vorgegebenen Genauigkeit erkennt, aus welchem zeitlichen Teil des Signals er eine erste Information decodieren soll und aus welchem die nachfolgende usw.. Meistens werden bidirektionale Verbindungen genutzt, bei denen beide Partner als Sender und Empfänger agieren, zumindest um Steuersignale in beide Richtungen zu übertragen. Zwar ist es für eine solide Übertragung wichtig, dass der Empfänger erkennt, aus welchem zeitlichen Teil des empfangenen Signals er eine Information decodieren kann. Eine besonders genaue die Zeitsynchronisierung im Übertragungssystem im Verhältnis zur Symbol- oder Chipperiode ist jedoch meist nicht angestrebt und in der Praxis auch nicht von besonderem Vorteil. Kürzere Symbol- oder Chipperioden ermöglichen bei ansonsten gleicher Ausgestaltung des Systems jedoch höhere Datenübertragungsraten.

Im Bluetooth Standard wird dazu eine Uhr geführt und die weiteren Kommunikationspartner arbeiten mit einem offset zu dieser Uhr. Dazu führ jeder Kommunikationspartner eine eigene Uhr, die eine Zeitmessung (nicht Synchronisation) mit einer Genauigkeit von etwa 3*µ*s. Zur Synchronisierung wird beispielsweise der CSP Mechanismus verwendet. CSP bietet eine Genauigkeit der Synchronisierung von etwa 1 ms. Im Allgemeinen erreichen bekannte Übertragungssystem eine Zeitsynchronisierung oder Signallaufzeitmessung mit einer Genauigkeit entsprechend der Symbolrate bis maximal zu einem Viertel der Symbolrate.

In realen Umgebungen treten insbesondere bei der kabellosen Übertragung Multipathingeffekte auf, die unter anderem dafür sorgen, dass am Empfänger unterschiedliche Anteile des abgestrahlten Signals zu unterschiedlichen Zeitpunkten eintreffen, insbesondere weil sie unterschiedliche Wege zwischen Sender und Empfänger zurückgelegt haben. Diese Anteile überlagern sich am Empfänger meist wieder. Dabei ist der zuerst eintreffende Signalanteil nicht unbedingt der bezogen auf die Leistung stärkste Anteil. Übertragungssystem nutzen daher meist nur einen mittleren Anteil der Symbol- oder Chipperiode zur Decodierung.

In bestehenden Systemen werden, beispielsweise zur teilweisen Synchronisierung der Uhren der beteiligten Sender und Empfänger, Signallaufzeiten zwischen Sender und Empfänger gemessen.

Auch ist es aus reinen Entfernungsmesssystemen, die die Laufzeit eines Signalpulses auswerten, beispielsweise aus der EP 3 098 626 A1, bekannt, beim Eintreffen des Signals am Sender nach Reflexion des Signals über einen Komparator bei Überschreiten einer vorgegebenen Signalamplitude einen Signalgenerator zu starten, der eine auch wiederholte Flanke generiert und durch Abtastung der Flanke auf den Zeitpunkt des Eintreffens des Pulses zurück schließt, jedoch basierend auf der Überschreitung einer vorgegebenen Signalamplitude. Auch ist es bekannt, mittels Normalisierung die Auslösung einer Schwellenwertschaltung an die Gesamtsignalstärke anzupassen.

Aufgabe der vorliegenden Erfindung ist es, eine genauere Bestimmung des frühesten Empfangs einer Signaländerung zu ermöglichen. Dies kann beispielsweise zur Verbesserung der Laufzeitmessung, insbesondere zur Entfernungsmessung und/oder Synchronisierung, aber auch zur Erkennung und Abwehr von Relayangriffen wie auch zur Verkürzung der Symbol- oder Chipperiode oder zur Steigerung der Robustheit des Übertragungssystems genutzt werden. Dazu soll insbesondere nicht das Überschreiten einer vorgegebenen und/oder konstanten Signalamplitude genutzt werden.

Aufgabe der vorliegenden Erfindung ist es auch, ein Verfahren zur Erkennung und/oder Abwehr von Relayangriffen, eine Verwendung eines Zeitpunkts eines frühesten Empfangs einer Signaländerung und/oder einer Signalflanke zur Zutrittskontrolle, Authentifizierung, Entfernungsmessung, Synchronisierung und/oder zur Erkennung und/oder zur Abwehr von Relayangriffen, sowie ein Zugangskontrollsystem und ein Verfahren zur Sicherung eines Zugangssystem anzugeben

Insbesondere ermöglicht das erfindungsgemäße Verfahren die frühere Erkennung (early detection) der Signaländerung, beispielsweise in einem an einem Empfänger empfangenen Signals, was die für einen unerkannten Relayangriff verfügbare Zeitspanne deutlich reduziert und diesen somit verhindern oder zumindest deutlich erschweren kann, ohne dass dazu die Übertragungstechnik bestehender Datenübertragungssysteme, wie UMTS, LTE oder Bluetooth, verändert werden müsste oder Ultra-wide-Bandsignale erforderlich wären.

Die Genauigkeit des Verfahrens ist dabei insbesondere Abhängig von der Güte der Übertragung zwischen Sender und Empfänger. Das Verfahren passt sich insbesondere den aktuellen Übertragungsbedingungen an und kann so insbesondere sowohl bei schlechten Übertragungsbedingungen eingesetzt werden als auch bei guten Übertragungsbedingungen besonders hohe Genauigkeit liefern.

Gelöst wird die Aufgabe unter anderem durch ein Verfahren zur Bestimmung eines Zeitpunktes eines frühesten Empfangs einer Signaländerung und/oder einer Signalflanke, insbesondere zur Laufzeitmessung, insbesondere zur Entfernungsmessung und/oder Synchronisierung, in einem, insbesondere Symbol synchronisierten und/oder digitalen, Übertragungssystem.

Genutzt werden kann dabei jedes Übertragungssystem oder jeder Übertragungsstandard, das/der nachfolgende Anforderungen erfüllt, insbesondere können auch bestehende Systeme oder Standards verwendet werden. Insbesondere kann in der Regel auch bestehende Hardware genutzt werden und es muss meist lediglich softwareseitig eine entsprechende Verfahrensführung etabliert werden. Dies ist in der Regel möglich, ohne die Kompatibilität zu einem Standard oder anderen Geräten zu beeinträchtigen.

Mittels des Übertragungssystems wird mindestens eine erste Mehrzahl von Symbolen und/oder Chips mit einer ersten Symbol- oder Chiprate in mindestens einem ersten analogen Signal codiert von einem ersten zu einem zweiten Objekt und/oder in mindestens einem zweiten analogen auf Basis des ersten analogen Signals erzeugten Signal von einem ersten zu einem zweiten Objekt übertragen.

Die erste Mehrzahl von Symbolen und/oder Chips ist beliebig. Es kommt lediglich darauf an, dass das erste Signal mindestens eine Flanke aufweist, wie dies beispielsweise zur Codierung von 0 und 1 üblich ist. Bei dem ersten Signal kann es sich beispielsweise um ein niederfrequentes Signal handeln, beispielsweise im Kilo- oder Megaherzbereich, dass beispielsweise mit einem Trägersignal gemischt wird, wodurch beispielsweise das zweite analoge Signal, das in der Regel einen höheren Frequenzbereich aufweist, entsteht, beispielsweise im Gigaherzbereich. Dieses zweite Signal kann dann beispielsweise per Funk gesendet und von einem Empfänger empfangen werden.

Die Ordinalzahlen zur genaueren Bezeichnung der Mehrzahlen sollen keine Reihenfolge, insbesondere keine zeitliche Reihenfolge, angeben sondern lediglich zur Unterscheidung der verschiedenen mehrzahlen dienen. Andere willkürliche Bezeichnungen wie Mehrzahl A (anstelle erste Mehrzahl), Mehrzahl B (anstelle zweiter Mehrzahl), Mehrzahl C (anstelle dritter Mehrzahl) usw. sind beispielsweise ebenfalls möglich.

Insbesondere ist die dritte Mehrzahl keiner oder gleich der ersten Mehrzahl und/oder ist dritte Mehrzahl der übertragenen Symbole und/oder Chips eine Teilmenge oder gleich der ersten Mehrzahl von Symbolen und/oder Chips.

Insbesondere ist die fünfte Mehrzahl keiner oder gleich der ersten Mehrzahl und/oder ist fünfte Mehrzahl der übertragenen Symbole und/oder Chips eine Teilmenge oder gleich der ersten Mehrzahl von Symbolen und/oder Chips.

Insbesondere ist die fünfte Mehrzahl gleich der dritten Mehrzahl und/oder ist fünfte Mehrzahl der übertragenen Symbole und/oder Chips gleich der dritten Mehrzahl der übertragenen Symbole und/oder Chips.

In bekannten Übertragungssystemen findet in der Regel eine Anpassung von (relativen) Zeitmessungen im Sender und Empfänger statt, um klar zu erkennen, wann die Übertragung einer Informationseinheit, beispielsweise eines Symbols und/oder Chips beginnt und/oder endet und/oder wann eine Symbol- und/oder Chipperiode beginnt und/oder endet. Die Systeme sind somit in der Regel Symbol synchronisiert. Aus dieser Synchronisierung lassen sich auch Entfernungsmessungen ableiten, die aber nicht an die Möglichkeiten der erfindungsgemäßen Analyse heranreichen. Dabei stellt die Periode insbesondere, also die Symbol- und/oder Chipperiode, den Kehrwert der Rate, also konkret die Symbolperiode den Kehrwert der Symbolrate und/oder die Chipperiode den Kehrwert der Chiprate.

Die Symbole und/oder Chips können beliebige Informationen und/oder Nutzdaten symbolisieren, übertragen und/oder codieren. Es können von diesem Verfahren und/oder der Erkennung des frühesten Zeitpunktes unabhängige Informationen, Symbole oder Chips übertragen werden, beispielsweise Nutzdaten und/oder zur Verbesserung des Verfahrens beispielsweise Informationen zum Signal oder dessen Flanken.

Das Verfahren kann somit in herkömmlichen Übertragungssystemen angewandt werden und es können die ohnehin übermittelten Daten, Symbole, Chips und Signale zur Durchführung der Analyse verwendet werden. Eine Übertragung von Daten eigens für die Analyse ist nicht zwingend notwendig, kann aber vorteilhaft sein.

Erfindungsgemäß wird eine zweite Mehrzahl von Abtastwerten einer dritten Mehrzahl der übertragenen Symbole und/oder Chips des mindestens einen ersten oder zweiten analogen Signals am zweiten Objekt verwendet, um den frühesten Empfang der Signaländerung und/oder der Signalflanke eines zum vorausgehenden Symbol oder Chips geänderten Symbols oder Chips zu detektieren.

Die zweite Mehrzahl kann mit der ersten Mehrzahl zahlenmäßig übereinstimmen, gleiches gilt für die erste und dritte und die zweite und dritte Mehrzahl. In jedem Fall setzt die zweite Mehrzahl von Abtastwerten nicht zwei Gruppen von Abtastwerten voraus, denn die vor dem Wort "Mehrzahl" verwendeten Ordinale sollen lediglich die saubere Trennung der unterschiedlichen Mehrzahlen ermöglichen. Jede Mehrzahl weist zahlenmäßig insbesondere mindestens den Wert drei auf, insbesondere mindestens den Wert 10. Die dritte Mehrzahl ist in der Regel kleiner als die erste Mehrzahl, da die dritte Mehrzahl der übertragenen Symbolen und/oder Chips des mindestens einen ersten oder zweiten analogen Signals insbesondere eine Untermenge erste Mehrzahl von Symbolen und/oder Chips darstellt.

Erfindungsgemäß wird als Zeitpunkt des frühesten Empfangs der Zeitpunkt gewählt, an dem der, insbesondere in der Signal- und/oder Chipperiode, früheste der zweiten Mehrzahl von Abtastwerten oder die, insbesondere in der Signal- und/oder Chipperiode, früheste aggregierte Gruppe aus der zweiten Mehrzahl von Abtastwerten liegt, der/die einen aus einer vierten Mehrzahl von Abtastwerten des ersten und/oder zweiten analogen Signals bestimmen Wert über- oder unterschreitet oder der/die einen aus einer vierten Mehrzahl von Abtastwerten des ersten und/oder zweiten analogen Signals bestimmen Wertebereich verlässt.

Unter einem aggregierten Wert ist insbesondere ein durch mathematische Mittel, wie z. B. durch Bildung des arithmetischen, geometrischen oder eines anderen Mittelwerts oder Medians, aus einer Anzahl, Mehrzahl und/oder Menge von Werten, insbesondere Abtastwerten, gebildeter Wert zu verstehen.

Unter einer aggregierten Gruppe von Werten, insbesondere Abtastwerten, ist insbesondere eine Anzahl, Mehrzahl und/oder Menge von Werten, insbesondere Abtastwerten, zu verstehen, die insbesondere in zeitlicher Reihenfolge aufeinander, insbesondere unmittelbar, folgen und die zu einer Gruppe zusammengefasst sind. Aus einer solchen aggregierten Gruppe kann durch mathematische Mittel, wie z. B. durch Bildung des arithmetischen, geometrischen oder eines anderen Mittelwerts oder Medians, aus der Anzahl, Mehrzahl und/oder Menge von Werten, insbesondere Abtastwerten, ein aggregierter Wert gebildet werden.

Die früheste aggregierte Gruppe ist insbesondere die, die einen Abtastwert aufweist, der früher, insbesondere betrachtet in der Symbol- und/oder Chipperiode, genommen wurde als die Abtastwerte der anderen betrachten aggregierten Gruppen. Insbesondere sind die aggregierten Gruppen so gewählt, dass die Zeitpunkte der Nahme ihrer Abtastwerte nicht überlappen und/oder ist die früheste aggregierte Gruppe insbesondere die, deren Abtastwerte früher, insbesondere betrachtet in der Symbol- und/oder Chipperiode, genommen wurden als die Abtastwerte der anderen betrachten aggregierten Gruppe.

Insbesondere wird als Zeitpunkt des frühesten Empfangs der Zeitpunkt gewählt, an dem der, insbesondere in der Signal- und/oder Chipperiode, früheste der zweiten Mehrzahl von Abtastwerten oder die, insbesondere in der Signal- und/oder Chipperiode, früheste aggregierte Gruppe aus der zweiten Mehrzahl von Abtastwerten liegt, der/die eine gegenüber dem Rest der Abtastwerte der zweiten Mehrzahl von Abtastwerten und/oder dem und/oder innerhalb der ersten und/oder zweiten analogen Signal statistisch signifikante Veränderung zeigt und/oder der/die einen aus einer vierten Mehrzahl von Abtastwerten des ersten und/oder zweiten analogen Signals bestimmen Wert über- oder unterschreitet oder der/die einen aus einer vierten Mehrzahl von Abtastwerten des ersten und/oder zweiten analogen Signals bestimmen Wertebereich verlässt.

Es wird also geprüft, wann oder in welchem Abtastwert oder in welcher aggregierten Gruppe die erste Veränderung des empfangenen ersten oder zweiten analogen Signals detektiert wird, die mindestens eine bestimmte Anforderung erfüllt, die insbesondere vom Signal selbst abhängt. Die Veränderung wird insbesondere bestimmt durch Vergleich des Abtastwertes mit einem aggregierten Wert, insbesondere einem, beispielsweise arithmetischen, Mittelwert oder Median, aus der vierten Mehrzahl von Abtastwerten. Als frühester Zeitpunkt kommt dabei ein absoluter Zeitpunkt, gemessen beispielsweise gegen eine Uhr des Übertragungssystems, in Frage. In der Regel wird es sich dabei aber um einen Zeitpunkt innerhalb der Symbol- oder Chipperiode handeln und somit um einen Zeitpunkt, der in einer Vielzahl oder allen Symbol- oder Chipperioden vorkommt. Allgemein kann es sich also um einen sich wiederholenden Zeitpunkt handeln, insbesondere gemessen in Bezug auf eine Taktzeit oder Taktperiode, beispielsweise gemessen gegen eine Uhr oder einen Taktgeber des Übertragungssystems, insbesondere modulo der Symbol- oder Chipperiode. Als der Zeitpunkt des frühesten der zweiten Mehrzahl von Abtastwerden kann somit ebenfalls ein absoluter Zeitpunkt gewählt werden, vorteilhafterweise handelt es sich aber um den Zeitpunkt des frühesten der zweiten Mehrzahl von Abtastwerten in der Signal- und/oder Chipperiode. Dadurch lässt sich durch Aggregierung mehrerer Abtastwerte an zu unterschiedlichen absoluten Zeiten übertragenen Symbolen und/oder Chips die Genauigkeit erhöhen.

Erfindungsgemäß ist die zweite Mehrzahl von Abtastwerten der dritten Mehrzahl der übertragenen Symbole und/oder Chips so gewählt, dass sie an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode versetzten und/oder mindestens zehn, insbesondere mindestens 20, Prozent der Symbol- und/oder Chipperiode umrahmenden, ersten Zeitpunkten in der Symbol- und/oder Chipperiode liegen, wobei der Abstand in der Symbol- und/oder Chipperiode der ersten Zeitpunkte untereinander insbesondere kleiner ist als das kleinstmögliche Samplingintervall des zweiten Objekts des Übertragungssystems.

Die Zeitpunkte der Nahme der Abtastwerte sind also insbesondere so gelegt, dass sie an unterschiedlichen Symbolen oder Chips genommen sind, also beispielsweise in unterschiedlichen Symbol- und/oder Chipperioden. Darüber hinaus überspannen sie zusammen insbesondere mindestens zehn Prozent der Symbol- und/oder Chipperiode ab.

Insbesondere wird die zweite Mehrzahl von Abtastwerten so verarbeitet, dass sie, in zeitlicher Hinsicht modulo der Symbol- oder Chipperiode betrachtet, aggregiert werden und/oder in zeitlicher Hinsicht hinsichtlich ihrer Lage innerhalb der Symbol- oder Chipperiode betrachtet aggregiert betrachtet werden. Dadurch lassen sich Messungen an mehreren Symbolen und/oder Chips zusammen betrachten, wodurch die Genauigkeit unter der Annahme konstanter Übertragungsbedingungen erhöht wird. Insbesondere werden jeweils solche Abtastwerte zusammen betrachtet und/oder aggregiert, die an zumindest am Sender und/oder theoretisch gleich verlaufenden Signalflanken oder Signaländerungen genommen wurden, insbesondere an Flanken zwischen zwei unterschiedlichen Symbolen und/oder Chips, wobei die unterschiedlichen Symbole und/oder Chips und insbesondere auch ihre Abfolge, zwischen denen die Flanken, an denen die zusammen betrachteten und/oder aggregierten Abtastwerte genommen wurden, lagen, insbesondere identisch sind.

Insbesondere werden genommene Abtastwerte in Gruppen eingeteilt, wobei jede Gruppe einer Abfolge zweier unterschiedlicher aufeinander folgender Symbole und/oder Chips zugeordnet ist. Insbesondere werden für/in mindestens eine(r) oder jede(r) Gruppe mindestens 10, insbesondere mindestens 100, Abtastwerte genommen. Insbesondere werden jeweils mindestens 10 Abtastwerte für mindestens 10 Zeitpunkte in der Symbol- oder Chipperiode genommen und/oder eingeteilt.

Gelöst wird die Aufgabe auch durch ein Übertragungssystem eingerichtet zur Durchführung eines erfindungsgemäßen Verfahrens.

Gelöst wird die Aufgabe auch durch ein Verfahren zur Sicherung eines Zugangssystems aufweisend ein Autorisierungsmittel und ein Zugangskontrollmittel, wobei zwischen dem Autorisierungsmittel und dem Zugangskontrollmittel elektrisch, magnetisch oder elektromagnetisch mindestens eine erste Mehrzahl von Symbolen und/oder Chips mit einer ersten Symbol- oder Chiprate in mindestens einem ersten analogen Signal codiert von einem ersten aus den zwei Mitteln Autorisierungsmittel und Zugangskontrollmittel zu einem zweiten aus den zwei Mitteln Autorisierungsmittel und Zugangskontrollmittel und/oder in mindestens einem zweiten analogen auf Basis des ersten analogen Signals erzeugten Signal von einem ersten aus den zwei Mitteln Autorisierungsmittel und Zugangskontrollmittel zu einem zweiten aus den zwei Mitteln Autorisierungsmittel und Zugangskontrollmittel mittels eines Übertragungssystems übertragen wird, wobei der Zeitpunkt des frühesten Empfangs einer Signaländerung und/oder einer Signalflanke mittels einem erfindungsgemäßen Verfahren oder System bestimmt wird und bei Überschreiten einer vorbestimmten zeitlichen Abweichung eines Zeitpunktes eines Datenempfangs von dem Zeitpunkt des frühesten Empfangs und/oder bei Abweichung des frühesten Empfangs von einem vorbestimmten oder mit anderen Methoden berechneten Zeitfensters der Zugang, Zutritt, das Aktivieren, das Deaktivieren und/oder ein Öffnen durch das Zugangskontrollmittel verwehrt wird und/oder auf Basis des Zeitpunkt des frühesten Empfangs eine Signallaufzeit und/oder Signalrundlaufzeit und/oder eine Entfernung bestimmt wird und wenn bestimmte Signallaufzeit und/oder Signalrundlaufzeit und/oder Entfernung eine vorbestimmte Signallaufzeit und/oder Signalrundlaufzeit und/oder eine vorbestimmte Entfernung und/oder eine vorbestimmte Abweichung von auf anderem Weg oder mittels anderem Verfahren bestimmte Signallaufzeit und/oder Signalrundlaufzeit und/oder Entfernung überschreitet, der Zugang, Zutritt, das Aktivieren, das Deaktivieren und/oder das Öffnen, insbesondere durch das Zugangskontrollmittel und/oder verwehrt wird.

Unter einem Datenempfang wird insbesondere der Empfangs eines Signalanteils, der vom Übertragungssystem, insbesondere auch ohne das erfindungsgemäße Verfahren, verwendet wird, um daraus eine Information, ein Datenpaket oder Bit zu erkennen, abzuleiten und/oder zu decodieren, wobei der der Signalanteil insbesondere keine Anteile aufweist, die das Übertragungssystem, insbesondere auch ohne das erfindungsgemäße Verfahren, nicht verwendet ein Datenpaket oder Bit zu erkennen, abzuleiten und/oder zu decodieren. Dabei kann es sich beispielswiese um einen konstanten Signalzustand handeln, wie beispielsweise eine konstante Spannung, wie beispielsweise zur Codierung einer 0 oder 1 üblich, aber auch um eine Flanke, aus der ein Bit abgeleitet wird. Unter einem Zeitpunkt eines Datenempfangs wird insbesondere der Begin des Empfangs eines Signalanteils verstanden, , der vom Übertragungssystem insbesondere auch ohne das erfindungsgemäße Verfahren, verwendet wird, um daraus eine Information, ein Datenpaket oder Bit zu erkennen, abzuleiten und/oder zu decodieren, wobei , der Signalanteil insbesondere keine Anteile aufweist, die das Übertragungssystem, insbesondere auch ohne das erfindungsgemäße Verfahren, nicht verwendet ein Datenpaket oder Bit zu erkennen, abzuleiten und/oder zu decodieren.

Die erfindungsgemäßen Verfahren, Systeme und Verwendungen ermöglichen es insbesondere auch Signale oder Signaländerungen, die um bis zu 10dB, insbesondere bis zu 20dB oder sogar bis zu 30dB, niedriger liegen als die Signalanteile, die vom Übertragungssystem ohne das erfindungsgemäße Verfahren verwendet werden, um daraus eine Information, ein Datenpaket oder Bit zu erkennen, abzuleiten und/oder zu decodieren.

Dadurch lassen sich, Signalanteile mit nur einen relativ geringen Signalanteil, beispielsweise einen mit bis zu oder um 10 dB, insbesondere bis zu oder um 20 dB, insbesondere bis zu oder um 30 dB, niedrigerer Amplitude und/oder Änderung als die maximale Amplitude und/oder Änderung im empfangenen und/oder gesendeten Signal, erkennen, insbesondere als Zeitpunkt des frühesten Empfangs, und/oder insbesondere wenn sie einen Abstand von mindestens 1/8, insbesondere mindestens 1/20, insbesondere mindestens 1/80, insbesondere mindestens 1/250, der Symbolrate von der maximalen und/oder größeren Amplitude und/oder Änderung im empfangenen Signal, insbesondere wenn die zweite und/oder die vierte Mehrzahl größer gleich 400 ist und/oder die zweite Mehrzahl an mindestens 400, insbesondere unmittelbar aufeinander folgenden, Flanken und/oder Signaländerungen genommen wurde. Vorteilhafterweise sind die Verfahren, Systemen und Verwendungen entsprechend ausgebildet. Dies kann insbesondere in bestehenden Übertragungssystem und mit bestehender Hardware realisiert werden.

Ebenfalls lässt sich in erfindungsgemäßen Verfahren, Systemen und Verwendungen die Genauigkeit der Zeitmessung, Signallaufzeitmessung, Signalrundlaufzeitmessung und/oder der Zeitsynchronisierung, insbesondere wenn die zweite und/oder die vierte Mehrzahl größer gleich 400 ist und/oder die zweite Mehrzahl an mindestens 400, insbesondere unmittelbar aufeinander folgende, Flanken und/oder Signaländerungen genommen wurde, auf 1/8, insbesondere 1/20, insbesondere 1/80, der Symbolrate des Übertragungssystems verbessern. Ebenfalls lässt sich in erfindungsgemäßen Verfahren, Systemen und Verwendungen die Genauigkeit der Zeitmessung, Signallaufzeitmessung, Signalrundlaufzeitmessung und/oder der Zeitsynchronisierung, insbesondere wenn die zweite und/oder die vierte Mehrzahl größer gleich 4000 ist und/oder die zweite Mehrzahl an mindestens 4000, insbesondere unmittelbar aufeinander folgenden, Flanken und/oder Signaländerungen genommen wurde, auf 1/25, insbesondere 1/60, insbesondere 1/250, der Symbolrate des Übertragungssystems verbessern. Vorteilhafterweise sind die Verfahren, Systemen und Verwendungen entsprechend ausgebildet. Dies kann insbesondere in bestehenden Übertragungssystem und mit bestehender Hardware realisiert werden. Auch ein Verfahren zur Verbesserung eines Übertragungssystems zur Durchführung eines erfindungsgemäßen Verfahrens oder zur Erstellung eines erfindungsgemäßen Systems stellt somit Gegenstand der Erfindung dar.

Gelöst wird die Aufgabe auch durch ein Zugangskontrollsystem aufweisend ein Autorisierungsmittel und ein Zugangskontrollmittel, wobei das Zugangskontrollsystem ein Übertragungssystem aufweist, eingerichtet zwischen dem Autorisierungsmittel und dem Zugangskontrollmittel elektrisch, magnetisch oder elektromagnetisch mindestens eine erste Mehrzahl von Symbolen und/oder Chips mit einer ersten Symbol- oder Chiprate in mindestens einem ersten analogen Signal codiert von einem ersten aus Autorisierungsmittel und Zugangskontrollmittel zu einem zweiten aus Autorisierungsmittel und Zugangskontrollmittel und/oder in mindestens einem zweiten analogen auf Basis des ersten analogen Signals erzeugten Signal von einem ersten aus den zwei Mitteln Autorisierungsmittel und Zugangskontrollmittel zu einem zweiten aus den zwei Mitteln Autorisierungsmittel und Zugangskontrollmittel zu übertragen, wobei das Zugangskontrollsystem eingerichtet ist, einen Zeitpunkt des frühesten Empfangs einer Signaländerung und/oder einer Signalflanke mittels einem der vorstehenden Verfahren zu bestimmen und bei Überschreiten einer vorbestimmten zeitlichen Abweichung eines Zeitpunktes eines Datenempfangs von dem Zeitpunkt des frühesten Empfangs und/oder bei Abweichung des frühesten Empfangs von einem vorbestimmten oder mit anderen Methoden berechneten Zeitfensters den Zugang, Zutritt, das Aktivieren, das Deaktivieren und/oder das Öffnen, insbesondere durch das Zugangskontrollmittel zu verwehren
und/oder auf Basis des Zeitpunkt des frühesten Empfangs eine Signallaufzeit und/oder Signalrundlaufzeit und/oder eine Entfernung zu bestimmen und bei Überschreiten einer vorbestimmten Signallaufzeit und/oder Signalrundlaufzeit und/oder einer vorbestimmten Entfernung und/oder bei Überschreiten einer vorbestimmten Abweichung von auf anderem Weg oder mittels anderem Verfahren oder anderen Mitteln bestimmter Signallaufzeit und/oder Signalrundlaufzeit und/oder Entfernung einen Zugang, einen Zutritt, eine Aktivieren, Deaktivieren und/oder ein Öffnen, insbesondere des Zugangskontrollmittels und/oder durch das Zugangskontrollmittel, zu verwehren.

Gelöst wird die Aufgabe auch durch die Verwendung eines Zeitpunkts eines frühesten Empfangs einer Signaländerung und/oder einer Signalflanke zur Zutrittskontrolle, Authentifizierung, Entfernungsmessung, Synchronisierung und/oder zur Erkennung und/oder zur Abwehr von Relayangriffen, wobei mittels eines Übertragungssystems mindestens eine erste Mehrzahl von Symbolen und/oder Chips mit einer ersten Symbol- oder Chiprate in mindestens einem ersten analogen Signal codiert von einem ersten zu einem zweiten Objekt und/oder in mindestens einem zweiten analogen auf Basis des ersten analogen Signals erzeugten Signal von einem ersten zu einem zweiten Objekt übertragen werden und eine zweite Mehrzahl von Abtastwerten der übertragenen Symbole und/oder Chips des mindestens einen ersten oder zweiten analogen Signals am zweiten Objekt verwendet wird, um den frühesten Empfang der Signaländerung und/oder der Signalflanke eines zum vorausgehenden Symbol oder Chips geänderten Symbols oder Chips zu detektieren, wobei als Zeitpunkt des frühesten Empfangs der Zeitpunkt gewählt wird, an dem die erste Änderung des empfangenen ersten oder zweiten analogen Signals und/oder einer aggregierten Gruppe des empfangenen ersten oder zweiten analogen Signals detektiert wird, die statistisch signifikant ist und/oder einen aus einer vierten Mehrzahl von Abtastwerten des ersten und/oder zweiten analogen Signals bestimmen Wert über- oder unterschreitet oder einen aus einer vierten Mehrzahl von Abtastwerten des ersten und/oder zweiten analogen Signals bestimmen Wertebereich verlässt,
wobei die zweite Mehrzahl von Abtastwerten der dritten Mehrzahl der übertragenen Symbole und/oder Chips so gewählt ist, dass sie an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode versetzten und/oder mindestens zehn, insbesondere mindestens 20, Prozent der Symbol- und/oder Chipperiode umrahmenden, ersten Zeitpunkten in der Symbol- und/oder Chipperiode liegen, wobei der Abstand in der Symbol- und/oder Chipperiode der Zeitpunkte untereinander insbesondere kleiner ist als das kleinstmögliche Samplingintervall des zweiten Objekts des Übertragungssystems.

Die oben zum Verfahren zur Bestimmung des Zeitpunktes des frühesten Empfangs gemachten Ausführungen gelten für identische Begriffe ebenso für bezüglich des Verfahrens zur Sicherung eines Zugangssystems, der Verwendung und/oder des Systems.

Insbesondere wird bezüglich der Verfahren, der Verwendung und/oder Systems ein Zugang, ein Zutritt, ein Aktivieren, ein Deaktivieren und/oder ein Öffnen, insbesondere durch das Zugangskontrollmittel und/oder des Zugangskontrollmittels, gewährt, wenn keine Abweichung und/oder Überschreitung vorliegt oder wenn keine Abweichung und/oder Überschreitung vorliegt. Insbesondere der Zugang, der Zutritt, das Aktivieren, Deaktivieren und/oder das Öffnen nur gewährt, wenn bei einer Vielzahl von Wiederholungen keine oder nur einer vorbestimmte Anzahl von Abweichung(en) und/oder Überschreitung(en) vorliegt/en oder wenn keine oder maximal eine vorbestimmte Anzahl von Abweichung(en) und/oder Überschreitung(en) vorliegt/en.

Insbesondere wird der Zugang, der Zutritt, das Aktivieren, Deaktivieren und/oder das Öffnen nur gewährt, wenn mindestens eine weitere Authentifizierungsanforderung erfüllt ist, beispielsweise ein korrektes Passwort eingegeben wird oder das Zertifikat gültig und/oder im Zugangssystem als zulässig gekennzeichnet ist. Mit besonderem Vorteil beinhaltet die mindestens eine Authentifizierungsanforderung eine Vielzahl von Authentifizierungsanforderung, die von dem Zeitpunkt des Empfangs abhängen, insbesondere nach dieser Anmeldung und/oder mindestens eine Authentifizierungsanforderung, die unabhängig von dem Empfangszeitpunkt ist. Unabhängig vom Empfangszeitpunkt ist auch die zeitliche Gültigkeit eines Zertifikates, die zwar von der Zeit abhängen mag, aber nicht unmittelbar von der Zeit des Empfangs selbst.

Als Zugang wird insbesondere nicht nur ein Zugang in einen Bereich, im Sinne der möglich Bewegung eines Gegenstandes und/oder einer Person in diesen Bereich, beispielsweise das innere eines Raumes oder eines Fahrzeuges, sondern insbesondere auch der Zugang zu einer Funktion, insbesondere auch im Sinne von Aktivierung einer Funktion, verstanden, so beispielsweise der Zugang zu der Funktion des Anlassens oder Startens einer Fahrzeuges oder der Zugang zu der Funktion "Kaffee ausgeben" einer Kaffeemaschine. Entsprechend sind Zugangskontrollsysteme insbesondere nicht nur solche, die nur einen Zugang in einen Bereich, im Sinne der möglich Bewegung eines Gegenstandes und/oder einer Person in diesen Bereich hinein, kontrollieren, beschränken und/oder schützen, sondern insbesondere auch solche, die den Zugang zu einer Funktion, insbesondere auch im Sinne von Aktivierung einer Funktion, kontrollieren, beschränken und/oder schützen.

Als Zugangskontrollsystem kommen insbesondere Autorisierungssystem, beispielsweise zur Anmeldung in einem Computersystem, beispielsweise mittels Passwort und/oder Zertifikat, oder auch klassische Zugangskontrollsysteme wie Schlösser, Schranken, Türen und/oder Schleusen und/oder Aktivierung von Funktionen, beispielsweise einer Servicestation, wie Kaffeeautomat, in Frage. Insbesondere kann es sich dabei um Türen und/oder Zündschlösser und/oder Anlasser eines Fahrzeuges (z.B. Kraftfahrzeug, Flugzeug, Schiff oder autonomes Taxi - sowie aller denkbaren weiteren) handeln. Ebenfalls kann es sich um einen Zugang zu einer und/oder Aktivierung einer beliebigen Servicestation (Geldautomat, Telefon, Kaffeeautomat - die Liste ist beliebig erweiterbar) handeln. Als Autorisierungsmittel kommen beispielsweise Mobiltelefon, Schlüssel, Zertifikate und/oder Eingabesysteme zur Eingabe von Passwörtern in Frage.

Insbesondere handelt es sich bei dem Übertragungssystem der Verfahren, der Verwendung und/oder des Systems um ein drahtloses, beispielsweise eines verwendet für die Kommunikation zwischen Funkschlüsseln oder Nahfeldschlüsseln, insbesondere für Kraftfahrzeuge, und beispielsweise einem Kraftfahrzeug oder um zwei Bluetoothmodule.

Insbesondere wird bezüglich der Verfahren, der Verwendung und/oder des Systems die Signaländerung nur als solche erkannt und/oder akzeptiert und/oder der Zugang, der Zutritt, das Aktivieren, Deaktivieren und/oder das Öffnen nur gewährt und/oder liegt eine erfindungsgemäße Signaländerung nur dann vor,
- wenn es sich um eine erwartete und/oder vorbestimmte und/oder vereinbarte Signaländerung handelt und/oder
- wenn die Signaländerung eine, insbesondere auf zwischen erstem und zweitem Objekt, insbesondere Sender und Empfänger, ausgetauschten Symbolen und/oder Chips und/oder Signal basierende Information codiert,
- wenn die Signaländerung eine vorbestimmte und/oder unter Verwendung von zwischen erstem und zweitem Objekt, insbesondere Sender und Empfänger, ausgetauschten Symbolen und/oder Chips berechenbare Information codiert und/oder
- wenn die Signaländerung eine, insbesondere auf zwischen erstem und zweitem Objekt, insbesondere Sender und Empfänger, ausgetauschten Symbolen und/oder Chips und/oder Signal basierende Form und/oder Art aufweist und/oder
- wenn die Signaländerung eine vorbestimmte und/oder unter Verwendung von zwischen erstem und zweitem Objekt, insbesondere Sender und Empfänger, ausgetauschten Symbolen und/oder Chips berechenbare Form und/oder Art aufweist.

Dabei muss die Information, Art und/oder Form nicht als und/oder mittels einer konkret(e) genau definierte(n) Information, Art und/oder Form vorbestimmt und/oder berechenbar sein, sondern können vorbestimmte Toleranzen und/oder vorbestimmte Abweichungen von der vorbestimmten und/oder berechneten Information, Art und/oder Form zulässig sein. Dadurch lässt sich eine weitere Sicherung erreichen, weil einem Angreifer zusätzlich die Art der Signaländerung, die vorbestimmte und/oder errechnete Form und/oder die vorbestimmte und/oder errechnete Information bekannt sein müsste. Vorbestimmt und/oder berechnet kann eine Information auch durch die vorausgehende Kommunikation und/oder Übertragung sein und/oder werden. Eine besonders einfache Art einer vorbestimmten und/oder berechneten Form kann beispielsweise die Art der Flanke, charakterisiert als fallende oder steigende Flanke, sein. Auch wenn diese einfache Art bei einmaliger Anwendung nur eine vergleichsweise geringe Sicherung bietet, erhöht sich die Sicherung bei mehrfacher oder vielfacher Anwendung des Verfahrens deutlich. Bevorzugt wird die Vorbestimmung und/oder Berechnung der Form als steigende oder fallende Flanke und/oder der codierten vorbestimmten und/oder berechneten Information als 0 oder 1. Insbesondere wird der Zugang, der Zutritt, das Aktivieren, Deaktivieren und/oder das Öffnen nur gewährt, wenn, insbesondere neben mindestens einer anderen Authentifizierungsanforderung, eine Vielzahl von Authentifizierungsanforderung, die von dem Zeitpunkt des Empfangs abhängen, insbesondere nach dieser Anmeldung, insbesondere ihres Anspruchs 1, erfüllt sind.

Insbesondere wird eine Vielzahl von Zeitpunkten des frühesten Empfangs einer Vielzahl von Signaländerungen und/oder einer Vielzahl von Signalflanken mittels eines der vorstehenden Verfahren bestimmt und bei Überschreiten einer vorbestimmten Anzahl von Überschreitungen einer vorbestimmten und/oder berechneten Abweichung des jeweiligen Empfangs von dem jeweiligen Zeitpunkt des frühesten Empfangs und/oder bei Abweichung des jeweiligen frühesten Empfangs von einem jeweils vorbestimmten und/oder berechneten oder mit anderen Methoden berechneten Zeitfensters der Zugang, Zutritt, die Aktivierung und/oder ein Öffnen durch das Zugangskontrollmittel verwehrt.

Durch das Verfahren, die Verwendung und/oder das System kann beispielsweise mit hoher Genauigkeit sichergestellt werden, dass der Zugang nur gewährt wird, wenn das Autorisierungsmittel in einem vorgegebenen Abstandsbereich oder Volumen- und/oder Raumbereich vorhanden ist und/oder sichergestellt werden, dass kein Relayangriff vorliegt. Besonders vorteilhaft ist es, dass dies in vielen modernen Systemen ohne Änderung der Hardware möglich ist.

Erfindungsgemäß werden als die vierte Mehrzahl von Abtastwerten Abtastwerte einer fünften Mehrzahl der übertragenen Symbole und/oder Chips des mindestens einen ersten oder zweiten analogen Signals am zweiten Objekt verwendet, insbesondere um das Signifikanzniveau und/oder den bestimmten Wert oder Wertebereich zu ermitteln, insbesondere aus der Standardabweichung oder der Breite der Schwankung oder Streuung der vierten Mehrzahl von Abtastwerten. Eine statistisch signifikante Veränderung wird insbesondere angenommen, wenn die Veränderung das x-fache der Standardabweichung der vierten Mehrzahl von Abtastwerten erreicht oder übersteigt oder wobei der bestimmte Wert ein Mittelwert oder Median aus der vierten Mehrzahl von Abtastwerten zu- oder abzüglich des x-fachen der Breite der Schwankung innerhalb oder der Streuung der vierten Mehrzahl von Abtastwerten ist oder wobei der bestimmte Wertebereich sich über das das doppelte des x-fachen der Breite der Schwankung innerhalb oder Streuung der vierten Mehrzahl von Abtastwerten erstreckt, insbesondere um einen aggregierten Wert, insbesondere, beispielsweise arithmetischen, Mittelwert oder Median, aus der vierten Mehrzahl von Abtastwerten, oder wobei der bestimmte Wert das x-fache der Breite der Schwankung oder Streuung zuzüglich eines, beispielsweise arithmetischen, Mittelwerts oder Medians, aus der vierten Mehrzahl von Abtastwerten, ist.

Vorteilhafterweise liegt x im Bereich von 0,4 bis 5, insbesondere von 0,5 bis 3, insbesondere zwischen 1 und 3.

Insbesondere wird als Mittelwert das harmonische, kubische, geometrische, quadratische oder bevorzugt arithmetische Mittel, der Median oder der Modus verwendet.

Insbesondere wird als Standardabweichung einer Menge von Werten die empirische Standardabweichung der Abweichung der Menge von Werten von ihrem Mittelwert verwendet. Insbesondere stellt die Standardabweichung mathematisch die mittlere Abweichung der Werte zum Mittelwert dar.

Mit Vorteil werden als die vierte Mehrzahl von Abtastwerten Abtastwerte einer fünften Mehrzahl der übertragenen Symbole und/oder Chips des mindestens einen ersten oder zweiten analogen Signals am zweiten Objekt verwendet und wird die vierte Mehrzahl von Abtastwerten der fünften Mehrzahl der übertragenen Symbolen und/oder Chips so gewählt, dass ihre Abtastwerte an zu unterschiedlichen Zeiten übertragenen Symbolen und/oder Chips genommen sind und an mindestens fünf, insbesondere mindestens zehn, unterschiedlichen, insbesondere jeweils um mindestens zwei Prozent der Symbol- und/oder Chipperiode versetzten und/oder mindestens zehn, insbesondere mindestens 20, Prozent der Symbol- und/oder Chipperiode umrahmenden, zweiten Zeitpunkten in der Symbol- und/oder Chipperiode liegen.

Dadurch lässt sich aus dem Signal selbst eine, insbesondere dynamische, Anpassung der Schwelle zur Erkennung des frühesten Zeitpunktes erreichen und die Genauigkeit, insbesondere bei wechselnden Übertragungsbedingungen jeweils, erhöhen.

Mit weiterem Vorteil ist der Abstand in der Symbol- und/oder Chipperiode der zweiten Zeitpunkte untereinander insbesondere kleiner als das kleinstmögliche Samplingintervall des zweiten Objekts des Übertragungssystems, insbesondere um mindestens den Faktor zwei kleiner. Dadurch lassen sich die Fähigkeiten der eingesetzten Hardware optimal ausnutzen.

Vorteilhafterweise liegt die vierte Mehrzahl von Abtastwerten der fünften Mehrzahl der übertragenen Symbole und/oder Chips in einem Abschnitt der Symbol- und/oder Chipperiode, in oder zu dem das mindestens eine erste und/oder zweite analoge Signal konstant ist und/oder ein konstantes Niveau aufweist, zumindest am Sender und/oder theoretisch bei optimalen Übertragungsbedingungen betrachtet am Empfänger. Dadurch lässt sich eine besonders hohe Genauigkeit erreichen. Die Kenntnis, wann diese Bedingung gegeben ist, lässt sich relativ zur Symbol- und Signalperiode insbesondere unter Kenntnis der Spezifikation des Übertragungssystems und/oder aus dem Verlauf des Signals selbst zumindest näherungsweise herleiten.

Anzumerken ist, dass ein Zeitpunkt in der Symbol- und/oder Chipperiode am Empfänger und/oder ein Abschnitt in der Symbol- und/oder Chipperiode am Empfänger auf einer absoluten Uhr zu einer anderen Zeit liegt, als der gleiche Zeitpunkt in der Symbol- und/oder Chipperiode am Sender und/oder ein Abschnitt in der Symbol- und/oder Chipperiode am Sender, nämlich versetzt um die Signallaufzeit vom Sender zum Empfänger.

Mit Vorteil wird zur Bestimmung der Veränderung, des Signifikanzniveaus, der Breite der Schwankung oder Streuung und/oder des vorbestimmten Werts und/oder Wertebereichs mindestens eine Eigenschaft des ersten oder zweiten Signals, beispielsweise der Pegel und/oder die Amplitude und/oder die Phase des ersten oder zweiten Signals, verwendet und/oder als Veränderung des empfangenen ersten oder zweiten analogen Signals zumindest die Änderung der mindestens einen Eigenschaft des empfangenen ersten oder zweiten analogen Signals. Als Zeitpunkt des frühesten Empfangs kann der Zeitpunkt des frühesten Abtastwertes oder der aggregierten Gruppe verwendet werden, der bezüglich mindestens einer und/oder aller der mindestens einen Eigenschaft den bestimmten Wert über- oder unterschreitet oder den aus der vierten Mehrzahl von Abtastwerten des ersten und/oder zweiten analogen Signals bestimmten Wertebereich verlässt.

So kann beispielsweise lediglich die Phase der Abtastwerte herangezogen werden und/oder lediglich deren Amplitude. Auch ist es möglich, beides zu berücksichtigen und als Zeitpunkt des frühesten Empfangs den Zeitpunkt des frühesten Abtastwertes zu verwenden, der eine oder beide Kriterien erfüllt, beispielsweise einen Wertebereich bzgl. der Amplitude über- oder unterschreitet und/oder einen Wertebereich bezüglich der Amplitude verlässt.

Pegel und/oder die Amplitude und/oder die Phase sind gängige und erprobte Eigenschaften des Signals, in deren Änderung Symbole und/oder Chips codiert werden, beispielsweise Amplitudenumtastung (ASK) oder Phasenumtastung (PSK), wie beispielsweise multiple Phasenumtastung (MPSK), Gauß'sche Frequenzumtastung (GFSK) oder Quadraturamplitudenmodulation (QAM). An diesen oder nach diesen Verfahren modulierten ersten und/oder zweiten Signalen und/oder in Übertragungssystem, die eine solche Modulation nutzen oder in Vorrichtungen, die eine solche Modulation nutzen lässt sich das erfindungsgemäße Verfahren besonders einfach und zuverlässig umsetzen.

Vorteilhafterweise wird das zweite analoge Signal mittels Mischung und/oder mit einer Hochfrequenz aus dem ersten Signal erzeugt und/oder ist das zweite Signal hochfrequenter als das erste und/oder wird am zweiten Objekt aus dem zweiten Signal am zweiten Objekt vor der Abtastung das erste Signal soweit möglich rekonstruiert, insbesondere durch Mischung.

Mit Vorteil ist die zweite Mehrzahl gleich der vierten Mehrzahl und/oder die dritte Mehrzahl der übertragenen Symbole und/oder Chips gleich der fünften Mehrzahl der übertragenen Symbole und/oder Chips. Das bedeutet nicht, dass es sich um die gleichen Abtastwerte handelt, sondern bezieht sich lediglich auf die Anzahl der Abtastwerte in den Mehrzahlen, die vorteilhafterweise identisch gewählt sind.

Mit Vorteil werden die ersten Zeitpunkte und zweiten Zeitpunkte so gewählt, dass die ersten Zeitpunkte in einer ersten Zeitspanne der Symbol- und/oder Chipperiode und die zweiten Zeitpunkte in einer zweiten Zeitspanne der Symbol- und/oder Chipperiode liegen und die erste und zweite Zeitspanne sich in der Symbol- und/oder Chipperiode nicht überlappen.

Vorteilhafterweise ist das Übertragungssystem bidirektional. Dabei können in beide Richtungen Nutzdaten übertragen werden oder nur in eine Richtung Nutzdaten und in die andere Richtung zumindest Steuerdaten, wie beispielsweise Channel quality indicator (CQI) oder Acknowledgement (ACK) Signale, übertragen werden. Mit besonderem Vorteil wird ein erfindungsgemäßes Verfahren oder eine erfindungsgemäße Verwendung auf beiden Übertragungsrichtungen angewandt. Dann ist in Bezug auf eine Übertragungsrichtung das erste Objekt Sender und das zweite Objekt Empfänger und sind die Rollen und/oder Nummerierungen der Objekte in Bezug auf die entgegensetzte Richtung vertauscht. Insbesondere wird bei einer solchen Ausgestaltung eine Signalrundlaufzeit, insbesondere vom ersten zum zweiten Objekt und zurück oder umgekehrt, basierend auf mindestens einem frühesten Zeitpunkt am ersten Objekt und auf mindestens einem frühesten Zeitpunkt am zweiten Objekt bestimmt. Insbesondere wird die Signalrundlaufzeit zur Bestimmung einer Entfernung zwischen dem ersten und dem zweiten Objekt verwendet.

Mit besonderem Vorteil übertragen die Symbole und/oder Chips zumindest teilweise verschlüsselte Informationen, insbesondere zumindest teilweise verschlüsselte Informationen über den Verlauf des ersten und/oder zweiten analogen Signals und/oder solche die Rückschlüsse auf den Verlauf des ersten und/oder zweiten analogen Signals, die Art und/oder Form mindestens einer Flanke erlauben und wobei solche Rückschlüsse am zweiten Objekt gezogen und verwendet werden, beispielsweise zur Auswahl einer oder mehrerer der Mehrzahlen und/oder zur Festlegung einer oder mehrerer Zeitspannen, Abschnitte und/oder Zeitpunkte. Mit besonderem Vorteil übertragen die Symbole und/oder Chips zumindest teilweise verschlüsselte Informationen, insbesondere zumindest teilweise verschlüsselte Autorisierungsinformationen, wie beispielsweise ein Passwort oder Zertifikat. Durch derartige Ausgestaltungen kann die Sicherheit gegen Angriffe weiter erhöht werden.

Mit Vorteil sind die wird bezüglich der Verfahren, der Verwendung und/oder des Systems die Signaländerung nur als solche erkannt und/oder akzeptiert und/oder der Zugang, der Zutritt, das Aktivieren, Deaktivieren und/oder das Öffnen nur gewährt und/oder liegt eine erfindungsgemäße Signaländerung nur dann vor,
- wenn es sich um eine zuvor verschlüsselt vereinbarte und/oder verschlüsselt kommunizierte Signaländerung handelt und/oder
- wenn die Signaländerung eine, auf zwischen erstem und zweitem Objekt, insbesondere Sender und Empfänger, verschlüsselt ausgetauschten Daten basierende Information codiert,
- wenn die Signaländerung eine unter Verwendung von zwischen erstem und zweitem Objekt, insbesondere Sender und Empfänger, verschlüsselt ausgetauschten Daten berechenbare Information codiert und/oder
- wenn die Signaländerung eine auf zwischen erstem und zweitem Objekt, insbesondere Sender und Empfänger, verschlüsselt ausgetauschten Daten basierende Form und/oder Art aufweist und/oder
- wenn die Signaländerung eine unter Verwendung von zwischen erstem und zweitem Objekt, insbesondere Sender und Empfänger, verschlüsselt ausgetauschten Daten berechenbare Form und/oder Art aufweist.

Vorteilhafterweise liegen, die zweiten und/oder vierten Abtastungen äquidistant in der Symbol- und/oder Chipperiode und/oder liegen die zweiten und/oder vierten Abtastungen im Zeitverlauf äquidistant, wobei insbesondere ihr Abstand im zeitlichen Verlauf so gewählt ist, dass sich ihre Lage in der Symbol- und/oder Chipperiode frühestens nach fünf, insbesondere frühestens nach zehn, Symbolen und/oder Chips wiederholt.

Mit besonderem Vorteil ist und/oder wird die Symbol- und/oder Chipperiode in mindestens drei nicht überlappende zeitliche Bereiche und/oder sind und/oder werden in der Symbol- und/oder Chipperiode mindestens zwei, insbesondere drei, nicht überlappende zeitliche Bereiche definiert, wobei die ersten Zeitpunkte in einem ersten der drei Bereiche und die zweiten Zeitpunkte in einem zweiten der drei Bereiche liegen, wobei der erste und der zweite Bereich insbesondere aneinander angrenzen und/oder der dritte Bereich nicht zwischen dem ersten und zweiten liegt.

Dadurch ist es möglich, die Genauigkeit des Verfahrens bei ungenauer Synchronisierung und/oder verschiedenen Umgebungsbedingungen weiter zu verbessern. So kann beispielsweise sichergestellt werden, dass die vierte Mehrzahl von Abtastwerten einer fünften Mehrzahl der übertragenen Symbole und/oder Chips des mindestens einen ersten oder zweiten analogen Signals am zweiten Objekt in einem Bereich der Symbol- und/oder Chipübertragungsperiode genommen werden, bei dem, insbesondere auch unter Beachtung zu erwartender Ungenauigkeiten, mit einem möglichst konstanten Signal gerechnet werden kann und/oder in dem keine Flanke und/oder kein Einschwingvorgang und/oder kein durch Gauß'sche Frequenzumtastung (GFSK) erzeugter Übergang vorliegt und/oder zu dem, beispielsweise am ersten Objekt, ein konstantes erstes und/oder zweites Signal abgestrahlt wird.

Mit besonderem Vorteil ist/wird die Synchronisierungsgenauigkeit im Übertragungssystem zwischen ersten und zweitem Objekt, insbesondere ohne Einsatz des erfindungsgemäßen Verfahrens, so gewählt, dass die Abweichung, insbesondere der Uhren, Taktgeber und/oder Zeitmessungen, zwischen erstem und zweitem Objekt maximal 50% der Symbol- und/oder Chipperiode beträgt, insbesondere im Bereich von 10 bis 50 % der Symbol- und/oder Chipperiode liegt.

Mit besonderem Vorteil werden die Abtastwerte nach einer Signalaufbereitung, beispielsweise durch Mischen, Gleichrichten und/oder Glätten, genommen.

Mit besonderem Vorteil kann das Erkennen des frühesten Zeitpunktes am zweiten Objekt genutzt werden, um ein Signal vom zweiten Objekt auszusenden, insbesondere mit einer vorbestimmten und/oder kommunizierten zeitlichen Korrelation zum frühesten Zeitpunkt. Insbesondere kann das Erkennen des frühesten Zeitpunktes am zweiten Objekt genutzt werden, um das erfindungsgemäße Verfahren ein zweites Mal durchzuführen, wobei erstes und zweites Objekt miteinander vertauscht sind und wobei insbesondere der früheste Zeitpunkt und/oder seine zeitliche Lage relativ zur Zeit einer Uhr oder einem Zeitgeber des Übertragungssystems kommuniziert wird, insbesondere zu dem ersten Objekt und/oder mit dem ersten analogen Signal der zweiten Durchführung und/oder zu dem bei der zweiten Durchführung des Verfahrens zweiten Objekt und/oder wobei das analoge Signal der zweiten Durchführung eine vorbestimmte und/oder kommunizierte Beziehung zu dem frühesten Zeitpunkt der ersten Durchführung aufweist.

Mit Vorteil kann der früheste Empfang einer Signaländerung an einer Mehrzahl von Antennen, die örtlich voneinander entfernt, insbesondere mit einem einem Abstand von mindestens 0,5m zwischen zwei Antennen, in einer festen Anordnung zueinander positioniert sind, bestimmt und daraus die Einfallsrichtung der Signaländerung bestimmt werden. Mit Vorteil kann die Einfallsrichtung zur Authentifizierung genutzt werden und/oder eine Authentifizierungsanforderung darstellen. Mit Vorteil sind die Antennen an einem Fahrzeug angeordnet, dessen Öffnung oder Aktivierung und/oder Bedienung durch ein erfindungsgemäßes Verfahren, System und/oder eine erfindungsgemäße Verwendung gesichert und/oder beschränkt ist.

So kann die Mehrzahl von Antennen beispielsweise in einem Kraftfahrzeug angeordnet sein und die bestimmte Einfallsrichtung relativ zur Orientierung des Fahrzeuges bestimmt werden. So kann das Starten des Fahrzeuges beispielsweise nur erlaubt werden, wenn die Einfallsrichtung eine solche ist, die zur in Vorwärtsfahrrichtung des Fahrzeuges innerhalb eines vorbestimmten Winkelbereichs liegt, insbesondere eine solche ist, die die Lage des Senders in Vorwärtsfahrtrichtung des Fahrzeuges hinter dem Steuer indiziert und/oder zusammen mit der Entfernung die Lage des Senders innerhalb des Fahrzeuges voraussetzt.

Mit Vorteil ist das Übertragungssystem und/oder das erst und/oder das zweite Signal ein spezifiziertes und wird das empfangene Signal mit einer deutlich höheren Bandbreite, insbesondere mindestens 1,5 fach so großen Bandbreite, gesampelt als die spezifizierte Bandbreite des empfangenen Signals und wird die im Sampling erkannte Bandbreite des Signals zur Authentifizierung der Art verwendet, das bei Überschreiten einer vorbestimmten Bandbreite der Zugang, der Zutritt, das Aktivieren, das Deaktivieren und/oder das Öffnen verwehrt wird.

Mit Vorteil ist das System zur Durchführung einer oder mehrerer vorteilhafter Verfahrensführungen und/oder Verwendungen eingerichtet. Insbesondere ist das System ein Hardware- und Softwaresystem, aufweisend mindestens einen Sender und einen Empfänger und insbesondere an jedem Objekt mindestens eins aus Analog-Digital-Wandler zur Erzeugung der Abtastwerte und/oder Digital-AnalogWandler zur Erzeugung des ersten und/oder zweiten Signals, und insbesondere an jedem der Objekte und/oder mindestens eine CPU, insbesondere an jedem der Objekte. Insbesondere verwendet das Verfahren und/oder die Verwendung ein solches Hardware- und Softwaresystem. Insbesondere ist die Software eingerichtet zur Ansteuerung der Hardware zur Durchführung eines erfindungsgemäßen Verfahrens und/oder einer erfindungsgemäßen Verwendung.

Mit besonderem Vorteil erfolgt eine mehrfache Übertragung oder eine mehrfache Durchführung von Übertragungen von je mindestens einer ersten Mehrzahl von Symbolen und/oder Chips mit einer ersten Symbol- oder Chiprate in mindestens einem ersten analogen Signal (NF) codiert von einem ersten zu einem zweiten Objekt und/oder in mindestens einem zweiten analogen auf Basis des ersten analogen Signals erzeugten Signal (HF), insbesondere von einem ersten zu einem zweiten Objekt.

Mit besonderem Vorteil erfolgt eine Übertragung oder eine mehrfache Durchführung von Übertragungen von mindestens einer ersten Mehrzahl von Symbolen und/oder Chips mit einer ersten Symbol- oder Chiprate in mehreren ersten oder zweiten analogen Signalen und darin codiert jeweils mindestens eine erste Mehrzahl von Symbolen und/oder Chips mit einer ersten Symbol-/ oder Chiprate, insbesondere von einem ersten zu einem zweiten Objekt.

Mit besonderem Vorteil werden örtlich fix mit dem zweiten Objekt verbunden aber von diesem beabstandet, insbesondere um mindestens 10 cm beabstandet, mehrere Empfangsvorrichtungen vorgesehen und/oder wird bezüglich jeder der mehreren Empfangsvorrichtungen des zweiten Objekts ein Zeitpunkt des frühesten Empfangs einer Signaländerung und/oder einer Signalflanke bestimmt. Insbesondere ist das zweite Objekt und sind die mehreren Empfangsvorrichtungen Teil eines Kraftfahrzeuges und/oder das erste Objekt ein Zugangsmittel, insbesondere ein drahtloser Schlüssel. Insbesondere wird auf Basis der am zweiten Objekt verwendeten dritten Mehrzahl der übertragenen Symbole und/oder Chips des mindestens ersten oder zweiten Signals eine Richtung und/oder eine Entfernung bestimmt, in der das erste Objekt liegt, insbesondere durch Triangulation, insbesondere basierend auf den Unterschieden der Zeitpunkte des frühesten Empfangs an den mehreren Empfangsvorrichtungen des zweiten Objekts.. Insbesondere wird und/oder werden die ermittelte Entfernung(en) auf Konsistenz mit den Zeitpunkten des frühesten Empfangs geprüft. Insbesondere wird auf Basis der am zweiten Objekt der am zweiten Objekt verwendeten dritten Mehrzahl der übertragenen Symbole und/oder Chips des mindestens ersten oder zweiten Signals ein Winkel und/oder eine Winkeldifferenz zwischen ersten und zweiten Objekt und/oder einer der mehreren Empfangsvorrichtungen und/oder zwischen erstem Objekt und einer der mehreren ersten Empfangsvorrichtungen, insbesondere durch Phasenvergleich der dritten Mehrzahl der übertragenen Symbole und/oder Chips des mindestens ersten oder zweiten Signals.

Mit besonderem Vorteil werden örtlich fix mit dem ersten Objekt verbunden aber von diesem beabstandet, insbesondere um mindestens 10 cm beabstandet, mehrere Sendevorrichtungen des ersten Objekts vorgesehen und zum übertragen genutzt und/oder werden örtlich fix mit dem ersten Objekt verbunden aber von diesem beabstandet, insbesondere um mindestens 10 cm beabstandet, mehrere erste Objekte angeordnet und wird bezüglich jedes der mehreren ersten Objekten das erfindungsgemäße Verfahren durchgeführt und wird insbesondere aus den am zweiten Objekt verwendeten dritten Mehrzahl der übertragenen Symbole und/oder Chips des mindestens ersten oder zweiten Signals bezüglich jedes ersten Objekts und/oder jeder Sendevorrichtung ein Zeitpunkt des frühesten Empfangs einer Signaländerung und/oder einer Signalflanke bestimmt.

Mit besonderem Vorteil wird auf Grund der Phasenänderung zwischen der am zweiten Objekt verwendeten dritten Mehrzahl der übertragenen Symbole und/oder Chips des mindestens ersten oder zweiten Signals und/oder auf Basis der Differenzen der Zeitpunkte des frühesten Empfangs eine Entfernungs und/oder Orientierungsänderung zwischen erstem und zweitem Objekt bestimmt und/oder wird daraus bestimmt, um welche Länge sich mindestens zwei Signalwege der dritten Mehrzahl der übertragenen Symbole und/oder Chips des mindestens ersten oder zweiten Signals unterscheiden, insbesondere unter Annahme einer statischen Anordnung und Umgebung des ersten und zweiten Objekts während der Übertragung der ersten oder zweiten Signale. Insbesondere wird der kürzeste Signalweg und/oder der Signalanteil bestimmt, der über den kürzesten Signalweg empfangen wurde.

Insbesondere wird auf Basis der am zweiten Objekt verwendeten dritten Mehrzahl der übertragenen Symbole und/oder Chips des mindestens ersten oder zweiten Signals der mehreren ersten Objekte und/oder Sendevorrichtungen eine Richtung und/oder eine Entfernung bestimmt, in der das/die erste Objekt liegt/liegen, insbesondere durch Triangulation, insbesondere basierend auf den Unterschieden der Zeitpunkte des frühesten Empfangs der Signale von den ersten Objekten und/oder Sendevorrichtungen des ersten Objekts. Insbesondere wird und/oder werden die ermittelte Entfernung(en) auf Konsistenz mit den Zeitpunkten des frühesten Empfangs geprüft.

Mit besonderen Vorteil wird aufgrund der Phasenänderung zwischen der am zweiten Objekt verwendeten dritten Mehrzahl der übertragenen Symbole und/oder Chips des mindestens ersten oder zweiten Signals eine Einstrahlwinkeldifferenz zwischen ersten und zweiten Objekt bestimmt und/oder wird daraus bestimmt, um welchen Winkel sich mindestens zwei Signalwege der dritten Mehrzahl der übertragenen Symbole und/oder Chips des mindestens ersten oder zweiten Signals unterscheiden, insbesondere unter der Annahme einer statischen Anordnung und Umgebung des ersten und zweiten Objekts und/oder der Empfangsvorrichtungen und des zweiten Objekts während der Übertragung des ersten und der ersten weiteren Signale.

Mit besonderen Vorteil wird aufgrund der Phasenänderung zwischen einem empfangenen zweiten Signal und mehrerer empfangenen zweiten weiteren Signalen eine Einstrahlwinkeldifferenz zwischen ersten und zweiten Objekt bestimmt und/oder wird daraus bestimmt, um welchen Winkel sich mindestens zwei Signalwege des zweiten und der zweiten weiteren Signale unterscheiden, insbesondere unter der Annahme einer statischen Anordnung und Umgebung des ersten und zweiten Objekts und/oder der Empfangsvorrichtungen und des des ersten und/oder zweiten Objekts während der Übertragung des zweiten und der zweiten weiteren Signale.

Weitere vorteilhafte Ausgestaltungen und Vorteile sollen rein exemplarisch und nicht beschränkend anhand der nachfolgenden Skizzen weiter erläutert werden. Dabei zeigen:
- Figur 1:: eine schematische Darstellung eines Sende- und Empfangsmoduls aus dem Stand der Technik
- Figur 2:: eine Veranschaulichung der Aggregierung von Messwerten aus unterschiedlichen Symbolperioden
- Figur 3:: eine Veranschaulichung des erfindungsgemäßen Verfahrens

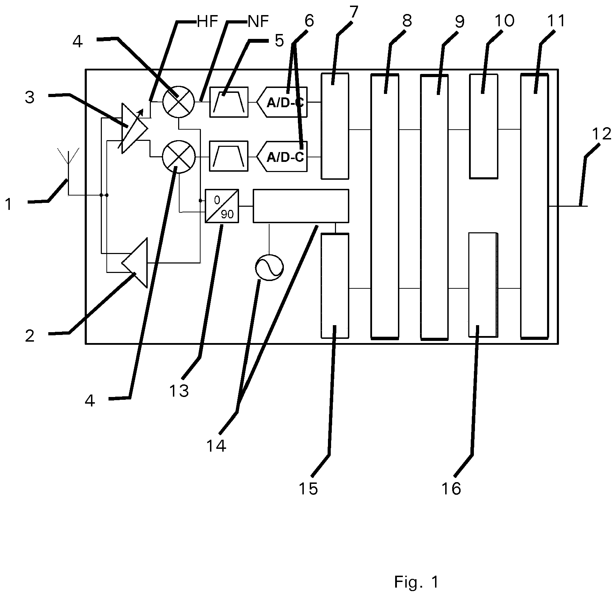

Figur 1 zeigt einen schematischen Aufbau eines Sende- und Empfangsmoduls aus dem Stand der Technik. Ein solches Modul ist beispielsweise durch den Chip CC25 von Texas Instruments gegeben. Ein solches Sende- und Empfangsmodul ist geeignet, mittels eines I&Q Verfahren Daten zu übertragen, beispielsweise unter Verwendung des Bluetooth Standards.

Gezeigt ist eine extern an den Chip angeschaltete Antenne 1. Die von der Antenne empfangenen Signale werden über den Eingangsverstärker 3 geleitet und dann in zwei Signale aufgeteilt. Diese werden zwei Mischern 4 zugeleitet und sodann jeweils über einen Bandpassfilter 5 an jeweils einen Analog-Digital-Wandler 6 geleitet. Einem der Mischer 4 wird darüber hinaus ein im Frequenzsynthesizer 14 erzeugtes Signal zugeleitet, während dem anderen Mischer 4 das Signal des Frequenzsynthesizer 14 erst nach Passage eines Phasenschiebers 13 zugeleitet wird. So lassen sich aus den Mischern 4 die I und Q Signale erhalten. Nach dem Analog-Digital-Wandler 6 werden die I und Q Signale dann in digitaler Form dem Demodulator 7 zugeleitet und sodann über eine Fehlerkorrektur und Dekodiereinheit 8 an einen Pakethandler 9 und den Eingangsspeicher 10 übergeben. Von da aus gelangen sie an einen Schnittstellentreiber 11 durch diesen die Daten dann über den Eingang 12 bereitgestellt werden, beispielsweise zur Weiterverarbeitung mittels einer CPU.

Daten, die gesendet werden sollen, können über den Eingang 12 dem Schnittstellentreiber 11 übergegeben werden und werden sodann in einen Ausgangsspeicher 16 geschrieben und über den Pakethandler 9 an die Fehlerkorrektur und Codiereinheit 8 übergeben. Anschließend werden die so erzeugten Signale mittels eines Modulators 15 und dem Frequenzsynthesizer 14 an den Sendeverstärker 2 und die Antenne 1 übergeben.

Sofern ein solches Modul für ein erfindungsgemäßes Verfahren, Verwendung oder System verwendet werden soll, wären neben den üblicherweise über den Eingang 12 bereitgestellten Empfangsdaten auch weitere Samplingwerte oder Abtastwerte der Analog-Digital-Wandler 6 abzugreifen, die zwar in der Regel im Analog-Digital-Wandler 6 erhoben werden, üblicherweise nur in den unmittelbar nachfolgenden Stufen zur Decodierung bzw. Rückgewinnung des digitalen Datenstroms aus dem ersten und/oder zweiten Signal verwendet, dann aber nicht weitergegeben oder weiterverwendet werden, beispielsweise nicht aus dem verwendeten Chip, hier beispielsweise über den Eingang 12, herausgeleitet werden.

Die Abtastwerte könnten zwar prinzipiell über den Eingang 12 ebenfalls bereitgestellt werden, was mittels einer Änderung der Firmware möglich sein könnte. Aber auch andere Daten-Ein- und/oder -Ausgänge sind denkbar. Grundsätzlich reicht die beinhaltete Hardware zusammen mit einer CPU und einer entsprechenden Software, insbesondere in einem Speicher, aber aus, um das erfindungsgemäße Verfahren umzusetzen oder ein Objekt eines erfindungsgemäßen Systems zu bilden.

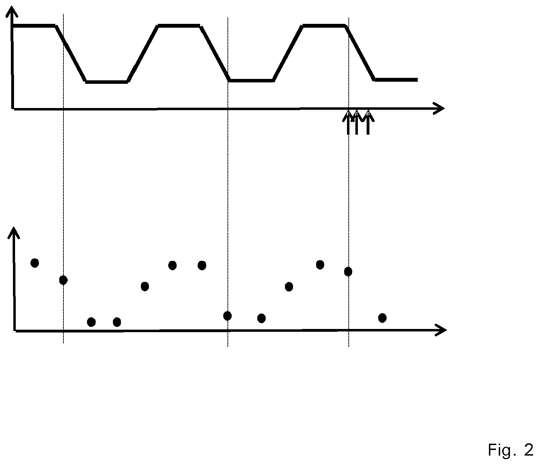

Figur 2 zeigt im oberen Teil ein Signal eines digitalen Datenübertragungssystems, das alternierend zwischen zwei Zuständen, beispielsweise 0 und 1 wechselt, mit dazwischen liegenden Flanken. Im unteren Teil sind Messwerte (Abtastungen) des oberen Signals als dicke Punkte eingezeichnet. An den in einer fallenden Flanke liegenden Messpunkten sind zur Verdeutlichung der Lage im oberen Signal gestrichelte Linien in den oberen Teil geführt. Die Lage der Abtastungen oder Messpunkte, genommen an den aufeinander folgenden fallenden Flanken, in der Symbol- oder Chipperiode ist durch drei Pfeile im oberen Teil veranschaulicht. Man erkannt, dass durch die zeitversetzte Abtastung des Signals an unterschiedlichen Zeitpunkten der Symbol- oder Chipperiode bezüglich beispielsweise der drei fallenden Flanken die sich wiederholende fallende Flanke zeitlich sehr hoch aufgelöst erfasst werden kann.

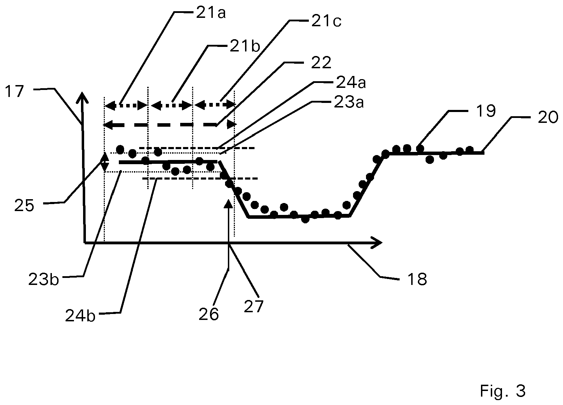

Figur 3 zeigt eine Veranschaulichung des erfindungsgemäßen Verfahrens. Dargestellt sind in einem Diagramm mit Amplitudenachse 17 und Zeitachse 18 des Empfängers das um die Signallaufzeit vom Sender zum Empfänger zeitverschobene Sendesignal 20 und aggregierte Abtastwerte 19 des empfangenen Signals am Empfänger. Die Punkte stellen jeweils an zehn zu unterschiedlichen Zeiten übertragenen Symbolen zu in der Symbolperiode näherungsweise identischen Zeiten genommene aggregierte Abtastwerte 19 dar. Dabei symbolisiert die Größe des Kreises die Ungenauigkeit der aggregierten Abtastungen in zeitlicher Hinsicht und bezüglich der Amplitude.

Dargestellt ist die Symbolperiode 22 und die Einteilung dieser in drei Bereiche 21a, 21b, 21c. Dargestellt ist auch die Grenze der Breite der Schwankung 23a, 23b der Mittelwerte der Abtastungen im zweiten Bereich 21b und die Grenzen 24a, 24b des sich durch Multiplikation mit dem Faktor x aus der Breite der Schwankung ergebene Wertebereich um das arithmetische Mittel der aggregierten Abtastwerte im zweiten Bereich 21b. Zu erkennen ist auch der erste aggregierte Abtastwert 26, der die Grenze des Wertebereichs 24a, 24b über- oder unterschreitet. Dieser definiert den frühesten Zeitpunkt 27 der empfangenen Signaländerung.

### Bezugszeichenliste

- 1: Antenne
- 2: Sendeverstärker
- 3: Eingangsverstärker
- NF: Niederfrequenzsignal
- 4: Mischer
- HF: Hochfrequenzsignal
- 5: Bandpassfilter
- 6: Analog-Digital-Wandler
- 7: Demodulator
- 8: Fehlerkorrektur und Codierer und Decodierer
- 9: Pakethandler
- 10: Eingangs FiFo Speicher
- 11: Schnittstellentreiber
- 12: Eingang
- 13: Phasenschieber
- 14: Frequenzsynthesizer
- 15: Modulator
- 16: Ausgangs FiFo Speicher
- 17: Amplitudenachse
- 18: Zeitachse
- 19: aggregierte Abtastwerte
- 20: Signal am Sender, um Signallaufzeit zeitversetzt
- 21a: erster Bereich der Symbolperiode
- 21b: zweiter Bereich der Symbolperiode
- 21c: dritter Bereich der Symbolperiode
- 22: Symbolperiode
- 23a: obere Grenze der Schwankung der Mitttelwerte
- 23b: untere Grenze der Schwankung der Mittelwerte
- 24a: obere Grenze des Wertebereichs
- 24b: untere Grenze des Wertebereichs
- 25: Breite der Schwankung der Mittelwerte
- 26: erster Wert, der die Grenze unterschreitet
- 27: frühester Zeitpunkt

## Patentansprüche

1. Verfahren zur Bestimmung eines Zeitpunktes (27) eines frühesten Empfangs einer Signaländerung und/oder einer Signalflanke, insbesondere zur Laufzeitmessung, insbesondere zur Entfernungsmessung und/oder Synchronisierung, in einem, insbesondere Symbol synchronisierten und/oder digitalen, Übertragungssystem,
wobei mittels des Übertragungssystems mindestens eine erste Mehrzahl von Symbolen und/oder Chips mit einer ersten Symbol- oder Chiprate in mindestens einem ersten analogen Signal (NF) codiert von einem ersten zu einem zweiten Objekt und/oder in mindestens einem zweiten analogen auf Basis des ersten analogen Signals erzeugten Signal (HF) von einem ersten zu einem zweiten Objekt übertragen wird,
wobei eine zweite Mehrzahl von Abtastwerten (19) einer dritten Mehrzahl der übertragenen Symbole und/oder Chips des mindestens einen ersten oder zweiten analogen Signals am zweiten Objekt, verwendet wird, um den frühesten Empfang der Signaländerung und/oder der Signalflanke eines vom vorausgehenden Symbol oder Chip abweichenden Symbols oder Chips zu detektieren, wobei als Zeitpunkt des frühesten Empfangs der Zeitpunkt gewählt wird, an dem der, insbesondere in der Signal- und/ oder Chipperiode, früheste der zweiten Mehrzahl von Abtastwerten (26) oder die früheste aggregierte Gruppe aus der zweiten Mehrzahl von Abtastwerten (26) liegt, der/die einen aus einer vierten Mehrzahl von Abtastwerten des ersten und/oder zweiten analogen Signals bestimmten Wert über- oder unterschreitet oder einen aus einer vierten Mehrzahl von Abtastwerten des ersten und/oder zweiten analogen Signals bestimmten Wertebereich (24a, 24b) verlässt, und insbesondere an dem der, insbesondere in der Signal- und/oder Chipperiode, früheste der zweiten Mehrzahl von Abtastwerten (26) oder die früheste aggregierte Gruppe aus der zweiten Mehrzahl von Abtastwerten (26), der/die eine statistisch signifikante Veränderung zeigt, liegt,
wobei die zweite Mehrzahl von Abtastwerten der dritten Mehrzahl der übertragenen Symbole und/oder Chips so gewählt ist, dass ihre Abtastwerte an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode (22) versetzten und/oder mindestens zehn, insbesondere mindestens 20, Prozent der Symbolund/ oder Chipperiode umrahmenden, ersten Zeitpunkten in der Symbolund/ oder Chipperiode liegen, wobei der Abstand in der Symbol- und/oder Chipperiode der ersten Zeitpunkte untereinander insbesondere kleiner ist als das kleinstmögliche Samplingintervall des zweiten Objekts des Übertragungssystems, **dadurch gekennzeichnet, dass** als die vierte Mehrzahl von Abtastwerten Abtastwerte einer fünften Mehrzahl der übertragenen Symbole und/oder Chips des mindestens einen ersten oder zweiten analogen Signals am zweiten Objekt verwendet werden.

2. Verfahren nach Anspruch 1,
wobei die Abtastwerte einer fünften Mehrzahl der übertragenen Symbole und/oder Chips des mindestens einen ersten oder zweiten analogen Signals am zweiten Objekt insbesondere verwendet werden,
um das Signifikanzniveau und/oder den bestimmten Wert oder Wertebereich zu ermitteln, insbesondere aus der Standardabweichung oder der Breite der Schwankung oder Streuung der vierten Mehrzahl von Abtastwerten,
wobei die statistisch signifikante Veränderung insbesondere dann angenommen wird, wenn die Veränderung das x-fache der Standardabweichung der vierten Mehrzahl von Abtastwerten erreicht oder übersteigt oder wobei der bestimmte Wert ein Mittelwert oder Median aus der vierten Mehrzahl von Abtastwerten zu- oder abzüglich des x-fachen der Breite der Schwankung innerhalb oder Streuung der vierten Mehrzahl von Abtastwerten ist oder wobei der bestimmte Wertebereich sich über das das 2x-fache der Breite der Schwankung innerhalb oder Streuung der vierten Mehrzahl von Abtastwerten erstreckt,
wobei x insbesondere zwischen 0,4 und 5, insbesondere zwischen 0,5 und 3, insbesondere zwischen 1 und 3, liegt, und/oder wobei als die vierte Mehrzahl von Abtastwerten Abtastwerte der fünften Mehrzahl der übertragenen Symbole und/oder Chips des mindestens einen ersten oder zweiten analogen Signals am zweiten Objekt verwendet werden und die vierte Mehrzahl von Abtastwerten der fünften Mehrzahl der übertragenen Symbolen und/oder Chips so gewählt ist, dass ihre Abtastwerte an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode versetzten und/oder mindestens zehn, insbesondere mindestens 20, Prozent der Symbolund/ oder Chipperiode umrahmenden, zweiten Zeitpunkten in der Symbolund/ oder Chipperiode liegen, wobei der Abstand in der Symbol- und/oder Chipperiode der zweiten Zeitpunkte untereinander insbesondere kleiner ist als das kleinstmögliche Samplingintervall des zweiten Objekts des Übertragungssystems

3. Verfahren nach einem der vorstehenden Ansprüche, wobei die vierte Mehrzahl von Abtastwerten der fünften Mehrzahl der übertragenen Symbole und/oder Chips in einem Abschnitt der Symbol- und/oder Chipperiode liegen, zu der das mindestens eine erste und/oder zweite analogen Signal konstant ist und/oder ein konstantes Niveau aufweist.

4. Verfahren nach einem der vorstehenden Ansprüche, wobei zur Bestimmung der Veränderung, des Signifikanzniveaus, der Breite der Schwankung oder Streuung und/oder des vorbestimmten Werts und/oder Wertebereichs der Pegel und/oder die Amplitude und/oder die Phase des ersten oder zweiten Signals verwendet wird und/oder als Veränderung des empfangenen ersten oder zweiten analogen Signals oder deren Abtastwerten die Änderung des Pegels und/oder der Amplitude und/oder der Phase des empfangenen ersten und/oder zweiten analogen Signals verwendet wird.

5. Verfahren nach einem der vorstehenden Ansprüche, wobei das zweite analoge Signal mittels Mischung mit einer Hochfrequenz aus dem ersten Signal erzeugt wird und/oder das zweite Signal hochfrequenter ist als das erste und/oder wobei am zweiten Objekt aus dem zweiten Signal am zweiten Objekt vor der Abtastung das erste Signal soweit möglich rekonstruiert wird, insbesondere durch Mischung.

6. Verfahren nach einem der vorstehenden Ansprüche, wobei die zweite Mehrzahl gleich der vierten Mehrzahl ist .

7. Verfahren nach einem der vorstehenden Ansprüche, wobei das Übertragungssystem ein bidirektionales ist und insbesondere das Verfahren auf beiden Übertragungsrichtungen angewandt wird.

8. Verfahren nach einem der vorstehenden Ansprüche, wobei die Symbole und/oder Chips zumindest teilweise verschlüsselte Informationen übertragen, insbesondere zumindest teilweise verschlüsselte Informationen über den Verlauf des ersten und/oder zweiten analogen Signals und/oder solche die Rückschlüsse auf den Verlauf des ersten und/oder zweiten analogen Signals erlauben und wobei solche Rückschlüsse am zweiten Objekt gezogen und verwendet werden, beispielsweise zur Auswahl einer oder mehrerer der Mehrzahlen und/oder zur Festlegung einer oder mehrerer Zeitspannen, Abschnitte und/oder Zeitpunkte.

9. Verfahren nach einem der vorstehenden Ansprüche, wobei die zweite und/oder vierte Mehrzahl von Abtastwerten äquidistant in der Symbolund/ oder Chipperiode liegen und/oder wobei die zweite und/oder vierte Mehrzahl von Abtastwerten im Zeitverlauf äquidistant liegen, wobei ihr Abstand im zeitlichen Verlauf so gewählt ist, dass sich ihre Lage in der Symbol- und/oder Chipperiode frühestens nach fünf, insbesondere frühestens nach zehn, Symbolen und/oder Chips wiederholt.

10. Verfahren nach einem der vorstehenden Ansprüche, wobei die Synchronisierungsgenauigkeit im Übertragungssystem zwischen ersten und zweitem Objekt, insbesondere ohne Einsatz des erfindungsgemäßen Verfahrens, so gewählt ist, dass die Abweichung, insbesondere der Uhren, Taktgeber und/oder Zeitmessungen, zwischen erstem und zweitem Objekt maximal 50% der Symbol- und/oder Chipperiode beträgt, insbesondere im Bereich von 10 bis 50 % der Symbol- und/oder Chipperiode liegt.

11. Verfahren zur Erkennung und/oder Abwehr von Relayangriffen,
wobei ein Verfahren nach den vorstehenden Ansprüchen zur Bestimmung des frühesten Empfangs einer Signaländerung und/oder einer Signalflanke verwendet wird und
a. bei Überschreiten einer vorbestimmten zeitlichen Abweichung eines eines Zeitpunktes eines Datenempfangs von dem Zeitpunkt des frühesten Empfangs und/oder bei Abweichung des frühesten Empfangs von einem vorbestimmten oder mit anderen Methoden berechneten Zeitfensters und/oder indem
b. bei Überschreiten einer auf Basis des Zeitpunkts des frühesten Empfangs bestimmten Signallaufzeit und/oder Signalrundlaufzeit und/oder Entfernung und/oder
c. bei Überschreiten einer vorbestimmten Abweichung von auf anderem Weg oder mittels anderer Verfahren bestimmter Signallaufzeit und/oder Signalrundlaufzeit und/oder Entfernung ein Relayangriff erkannt wird, Maßnahmen zur Abwehr des Angriffs eingeleitet werden und/oder eine, insbesondere mittels des empfangenen Signals übertragene, Anweisung und/oder Authentifizierung nicht ausgeführt und/oder nicht als gültig anerkannt wird.

12. Verfahren zur Sicherung eines Zugangssystem aufweisend ein Autorisierungsmittel und ein Zugangskontrollmittel, wobei zwischen dem Autorisierungsmittel und dem Zugangskontrollmittel elektrisch, magnetisch oder elektromagnetisch mindestens eine erste Mehrzahl von Symbolen und/oder Chips mit einer ersten Symbol- oder Chiprate in mindestens einem ersten analogen Signal (NF) codiert von einem ersten aus Autorisierungsmittel und Zugangskontrollmittel zu einem zweiten aus Autorisierungsmittel und Zugangskontrollmittel und/oder in mindestens einem zweiten analogen auf Basis des ersten analogen Signals erzeugten Signal (HF) von einem ersten aus Autorisierungsmittel und Zugangskontrollmittel zu einem zweiten aus Autorisierungsmittel und ein Zugangskontrollmittel mittels eines Übertragungssystems übertragen wird, wobei Zeitpunktes des frühesten Empfangs (27) einer Signaländerung und/oder einer Signalflanke mittels einem der Verfahren nach einem der vorstehenden Ansprüche bestimmt wird und bei Überschreiten einer vorbestimmten zeitlichen Abweichung eines Zeitpunktes eines Datenempfangs von dem Zeitpunkt des frühesten Empfangs und/oder bei Abweichung des frühesten Empfangs von einem vorbestimmten oder mit anderen Methoden berechneten Zeitfensters ein Zugang, Zutritt, eine Aktivierung und/oder ein Öffnen durch das Zugangskontrollmittel verwehrt wird und/oder auf Basis des Zeitpunkt des frühesten Empfangs eine Signallaufzeit und/oder Signalrundlaufzeit und/oder eine Entfernung bestimmt wird und bei Überschreiten einer vorbestimmten Signallaufzeit und/oder Signalrundlaufzeit und/oder einer vorbestimmten Entfernung und/oder bei Überschreiten einer vorbestimmten Abweichung von auf anderem Weg oder mittels anderem Verfahren bestimmter Signallaufzeit und/oder Signalrundlaufzeit und/oder Entfernung der Zugang, Zutritt und/oder das Öffnen durch das Zugangskontrollmittel verwehrt wird.

13. Zugangskontrollsystem aufweisend ein Autorisierungsmittel und ein Zugangskontrollmittel, wobei das Zugangskontrollsystem ein Übertragungssystem aufweist, eingerichtet zwischen dem Autorisierungsmittel und dem Zugangskontrollmittel elektrisch, magnetisch oder elektromagnetisch mindestens eine erste Mehrzahl von Symbolen und/oder Chips mit einer ersten Symbol- oder Chiprate in mindestens einem ersten analogen Signal (NF) codiert von einem ersten aus Autorisierungsmittel und Zugangskontrollmittel zu einem zweiten aus Autorisierungsmittel und Zugangskontrollmittel und/oder in mindestens einem zweiten analogen auf Basis des ersten analogen Signals erzeugten Signal (HF) von einem ersten ersten aus Autorisierungsmittel und Zugangskontrollmittel zu einem zweiten aus Autorisierungsmittel und ein Zugangskontrollmittel zu übertragen, wobei das Zugangskontrollsystem eingerichtet ist, einen Zeitpunktes des frühesten Empfangs (27) einer Signaländerung und/oder einer Signalflanke mittels einem der Verfahren nach einem der vorstehenden Ansprüche zu bestimmen und bei Überschreiten einer vorbestimmten zeitlichen Abweichung eines Zeitpunktes eines Datenempfangs von dem Zeitpunkt des frühesten Empfangs und/oder bei Abweichung des frühesten Empfangs von einem vorbestimmten oder mit anderen Methoden berechneten Zeitfensters einen Zugang, einen Zutritt, eine Aktivierung und/oder ein Öffnen zu verwehren
und/oder auf Basis des Zeitpunkt des frühesten Empfangs eine Signallaufzeit und/oder Signalrundlaufzeit und/oder eine Entfernung zu bestimmen und bei Überschreiten einer vorbestimmten Signallaufzeit und/oder Signalrundlaufzeit und/oder einer vorbestimmten Entfernung und/oder bei Überschreiten einer vorbestimmten Abweichung von auf anderem Weg oder mittels anderem Verfahren oder Mittel bestimmter Signallaufzeit und/oder Signalrundlaufzeit und/oder Entfernung den Zugang, Zutritt, die Aktivierung und/oder das Öffnen zu verwehren.

14. Verwendung eines Zeitpunkts eines frühesten Empfangs einer Signaländerung und/oder einer Signalflanke zur Zutrittskontrolle, Authentifizierung, Entfernungsmessung, Synchronisierung und/oder zur Erkennung und/oder zur Abwehr von Relayangriffen, wobei mittels eines Übertragungssystems mindestens eine erste Mehrzahl von Symbolen und/oder Chips mit einer ersten Symbol- oder Chiprate in mindestens einem ersten analogen Signal (NF) codiert von einem ersten zu einem zweiten Objekt und/oder in mindestens einem zweiten analogen auf Basis des ersten analogen Signals erzeugten Signal (HF) von einem ersten zu einem zweiten Objekt, übertragen werden und eine zweite Mehrzahl von Abtastwerten (19) der übertragenen Symbole und/oder Chips des mindestens einen ersten oder zweiten analogen Signals am zweiten Objekt, verwendet wird, um den frühesten Empfang der Signaländerung und/oder der Signalflanke eines zum vorausgehenden Symbol oder Chips geänderten Symbols oder Chips zu detektieren, wobei als Zeitpunkt des frühesten Empfangs (27) der Zeitpunkt gewählt wird, einen aus einer vierten Mehrzahl von Abtastwerten des ersten und/oder zweiten analogen Signals bestimmten Wert über- oder unterschreitet oder einen aus der vierten Mehrzahl von Abtastwerten des ersten und/oder zweiten analogen Signals bestimmten Wertebereich verlässt, und insbesondere an dem der, insbesondere in der Signal- und/oder Chipperiode, früheste der zweiten Mehrzahl von Abtastwerten (26) oder die früheste aggregierte Gruppe aus der zweiten Mehrzahl von Abtastwerten (26), der/die eine statistisch signifikante Veränderung zeigt, liegt,
wobei die zweite Mehrzahl von Abtastwerten der dritten Mehrzahl der übertragenen Symbole und/oder Chips so gewählt ist, dass ihre Abtastwerte an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode versetzten und/oder mindestens zehn, insbesondere mindestens 20, Prozent der Symbolund/ oder Chipperiode umrahmenden, ersten Zeitpunkten in der Symbolund/ oder Chipperiode liegen, wobei der Abstand in der Symbol- und/oder Chipperiode der ersten Zeitpunkte untereinander insbesondere kleiner ist als das kleinstmögliche Samplingintervall des zweiten Objekts des Übertragungssystems, **dadurch gekennzeichnet, dass** als die vierte Mehrzahl von Abtastwerten Abtastwerte einer fünften Mehrzahl der übertragenen Symbole und/oder Chips des mindestens einen ersten oder zweiten analogen Signals am zweiten Objekt verwendet werden.

15. Übertragungssystem aufweisend mindesten zwei Objekte, jeweils aufweisend mindestens eine Antenne und insgesamt aufweisend mindestens einen Sender und einen Empfänger und eine Rechen- und/oder Steuereinheit sowie mindestens einem Speicher und ausgebildet zur Übertragung einer erste Mehrzahl von Symbolen und/oder Chips mit einer ersten Symbol- oder Chiprate in mindestens einem ersten analogen Signal (NF) codiert von einem ersten der zwei Objekte zu einem zweiten der zwei Objekt und/oder in mindestens einem zweiten analogen auf Basis des ersten analogen Signals erzeugten Signal (HF) von einem ersten der zwei zu einem zweiten der zwei Objekt und
ausgebildet zur Bestimmung eines Zeitpunktes (27) eines frühesten Empfangs einer Signaländerung und/oder einer Signalflanke, insbesondere zur Laufzeitmessung, insbesondere zur Entfernungsmessung und/oder Synchronisierung, in einem, insbesondere Symbol synchronisierten und/oder digitalen, Übertragungssystem,
wobei das System ausgebildet ist, eine zweite Mehrzahl von Abtastwerten (19) einer dritten Mehrzahl der übertragenen Symbole und/oder Chips des mindestens einen ersten oder zweiten analogen Signals am zweiten Objekt, zu verwenden, um den frühesten Empfang der Signaländerung und/oder der Signalflanke eines vom vorausgehenden Symbol oder Chip abweichenden Symbols oder Chips zu detektieren, wobei als Zeitpunkt des frühesten Empfangs der Zeitpunkt gewählt wird, an dem der, insbesondere in der Signal- und/oder Chipperiode, früheste der zweiten Mehrzahl von Abtastwerten (26) oder die früheste aggregierte Gruppe aus der zweiten Mehrzahl von Abtastwerten (26) liegt, der/die einen aus einer vierten Mehrzahl von Abtastwerten des ersten und/oder zweiten analogen Signals bestimmten Wert über- oder unterschreitet oder einen aus einer vierten Mehrzahl von Abtastwerten des ersten und/oder zweiten analogen Signals bestimmten Wertebereich (24a, 24b) verlässt, und insbesondere an dem der, insbesondere in der Signal- und/oder Chipperiode, früheste der zweiten Mehrzahl von Abtastwerten (26) oder die früheste aggregierte Gruppe aus der zweiten Mehrzahl von Abtastwerten (26), der/die eine statistisch signifikante Veränderung zeigt, liegt,
wobei die zweite Mehrzahl von Abtastwerten der dritten Mehrzahl der übertragenen Symbole und/oder Chips so gewählt ist, dass ihre Abtastwerte an zu unterschiedlichen Zeiten übertragenen Symbolen und/oder Chips genommen sind und an mindestens fünf, insbesondere mindestens zehn unterschiedlichen, insbesondere jeweils um mindestens zwei Prozent der Symbol- und/oder Chipperiode (22) versetzten und/oder mindestens zehn, insbesondere mindestens 20, Prozent der Symbolund/ oder Chipperiode umrahmenden, ersten Zeitpunkten in der Symbolund/ oder Chipperiode liegen, wobei der Abstand in der Symbol- und/oder Chipperiode der ersten Zeitpunkte untereinander insbesondere kleiner ist als das kleinstmögliche Samplingintervall des zweiten Objekts des Übertragungssystems, **dadurch gekennzeichnet, dass** als die vierte Mehrzahl von Abtastwerten Abtastwerte einer fünften Mehrzahl der übertragenen Symbole und/oder Chips des mindestens einen ersten oder zweiten analogen Signals am zweiten Objekt verwendet werden.

## Claims

1. A method for determining the moment (27) of an earliest reception of a signal change and/or a signal edge, in particular for propagation time measurement, in particular for distance measurement and/or synchronisation, in a transmission system, in particular a symbol synchronised and/or digital transmission system,
wherein by means of the transmission system at least a first plurality of symbols and/or chips with a first symbol or chip rate is transmitted encoded in at least a first analogue signal (NF) from a first to a second object and/or in at least a second analogue signal (HF) generated on the basis of the first analogue signal from a first to a second object,
wherein a second plurality of samples (19) of a third plurality of the transmitted symbols and/or chips of said at least one first or second analogue signal at the second object is used to detect the earliest reception of the signal change and/ or the signal edge of a symbol or chip different from the preceding symbol or chip,
wherein the time at which the earliest of the second plurality of samples (26) or the earliest aggregated group from the second plurality of samples (26) is located, in particular in the signal and/or chip period, is selected as the time of the earliest reception, which exceeds or falls below a value determined from a fourth plurality of samples of the first and/or second analogue signal or leaves a value determined from a fourth plurality of samples of the first and/or second analogue signal, and in particular at which the earliest of the second plurality of samples (26), in particular in the value range (24a, 24b) of the signal and/or chip period, or the earliest aggregated group from the second plurality of samples (26), which shows a statistically significant change, is present,
the second plurality of samples of the third plurality of transmitted symbols and/ or chips being selected in such a way that their samples are taken at symbols and/or chips transmitted at different times and lie at at least five, in particular at least ten, different, in particular in each case offset by at least two percent of the symbol and/or chip period (22) and/or at least ten, in particular at least 20, percent of the symbol and/or chip period, in particular at least 20 percent of the symbol and/or chip period, wherein the distance in the symbol and/or chip period between the first time points is in particular smaller than the smallest possible sampling interval of the second object of the transmission system,
**characterised in that** samples of a fifth plurality of the transmitted symbols and/ or chips of said at least one first or second analogue signal at the second object are used as the fourth plurality of samples.

2. The method according to claim 1,
wherein the sample values of a fifth plurality of the transmitted symbols and/or chips of said at least one, in particular used first or second analogue signal at the second object are used to determine the significance level and/or the determined value or value range, in particular from the standard deviation or the width of the fluctuation or dispersion of the fourth plurality of sample values,
wherein the statistically significant change is assumed in particular when the change equals or exceeds x times the standard deviation of the fourth plurality of samples, or wherein the determined value is em mean or median of the fourth plurality of samples plus or minus x times the width of the variation within or dispersion of the fourth plurality of samples, or wherein the determined value range extends over 2x times the width of the variation within or dispersion of the fourth plurality of samples,
where x is in particular between 0.4 and 5, in particular between 0.5 and 3, in particular between 1 and 3, and/or
wherein samples of the fifth plurality of transmitted symbols and/or chips of said at least one first or second analogue signal at the second object are used as the fourth plurality of samples, and the fourth plurality of samples of the fifth plurality of transmitted symbols and/or chips is selected in such a way that their sample values are taken at symbols and/or chips transmitted at different times and lie at at least five, in particular at least ten different, in particular in each case offset by at least two percent of the symbol and/or chip period and/or at least ten, in particular at least 20, percent of the symbol and/or chip period framing second times in the symbol and/or chip period,
wherein the distance in the symbol and/or chip period of the second time points from one another is in particular smaller than the smallest possible sampling interval of the second object of the transmission system.

3. The method according to any one of the preceding claims, wherein the fourth plurality of samples of the fifth plurality of transmitted symbols and/or chips lie in a portion of the symbol and/or chip period at which said at least one first and/ or second analogue signal is constant and/or has a constant level.

4. The method according to any one of the preceding claims, wherein the level and/or amplitude and/or phase of the first or second signal is used to determine the change, the significance level, the width of the variation or spread and/or the predetermined value and/or range of values and/or the change in the level and/or amplitude and/or phase of the received first and/or second analogue signal is used as the change in the received first or second analogue signal or samples thereof.

5. The method according to one of the preceding claims, wherein the second analogue signal is generated from the first signal by means of mixing with a high frequency and/or the second signal is of a higher frequency than the first and/or wherein the first signal is reconstructed as far as possible from the second signal at the second object before the sampling, in particular by mixing.

6. The method according to any one of the preceding claims, wherein the second plurality is equal to the fourth plurality.

7. The method according to any one of the preceding claims, wherein the transmission system is a bidirectional one and in particular the method is applied on both transmission directions.

8. The method according to one of the preceding claims, wherein the symbols and/or chips transmit at least partially encrypted information, in particular at least partially encrypted information about the course of the first and/or second analogue signal and/or information which allows conclusions to be drawn about the course of the first and/or second analogue signal, and wherein such conclusions are drawn and used at the second object, for example for selecting one or more of the pluralities and/or for determining one or more time spans, sections and/or points in time.

9. The method according to one of the preceding claims, wherein the second and/ or fourth plurality of sampled values lie equidistantly in the symbol and/or chip period and/or wherein the second and/or fourth plurality of sampled values lie equidistantly in the course of time, wherein their spacing in the course of time is selected such that their position in the symbol and/or chip period is repeated at the earliest after five, in particular at the earliest after ten, symbols and/or chips.

10. The method according to one of the preceding claims, wherein the synchronisation accuracy in the transmission system between the first and second object, in particular without using the method according to the invention, is selected such that the deviation, in particular of the clocks, timers and/or time measurements, between the first and second object is at most 50% of the symbol and/or chip period, in particular is in the range of 10 to 50% of the symbol and/or chip period.

11. The method for the detection and/or defence of relay attacks, wherein a method according to the preceding claims is used to determine the earliest reception of a signal change and/or a signal edge, and
a. when a predetermined time deviation of a time of a data reception from the time of the earliest reception is exceeded and/or when the earliest reception deviates from a predetermined time window or from a time window calculated by other methods and/or by
b. when exceeding a signal propagation delay and/or signal round trip time and/or distance determined on the basis of the time of the earliest reception and/or
c. if a predetermined deviation from the signal propagation time and/or signal round trip time and/or distance determined by other means or by means of other procedures is exceeded, a relay attack is detected, measures are initiated to defend against the attack and/or an instruction and/ or authentication transmitted in particular by means of the received signal is not executed and/or is not recognised as valid.

12. The method for securing an access system comprising an authorisation means and an access control means, wherein between the authorisation means and the access control means electrically, magnetically or electromagnetically at least a first plurality of symbols and/or chips with a first symbol or chip rate is transmitted, at least a first plurality of symbols and/or chips having a first symbol or chip rate is transmitted electrically, magnetically or electromagnetically between said authorisation means and said access control means in at least a first analogue signal (AF) encoded from a first one of said authorisation means and said access control means to a second one of said authorisation means and said access control means and/or in at least a second analogue signal (RF) generated on the basis of said first analogue signal from a first one of said authorisation means and said access control means to a second one of said authorisation means and said access control means by means of a transmission system,
wherein the time of the earliest reception (27) of a signal change and/or a signal edge is determined by means of one of the methods according to one of the preceding claims and, if a predetermined time deviation of a time of a data reception from the time of the earliest reception and/or if the earliest reception deviates from a predetermined time window or a time window calculated by other methods, access, entry, activation and/or opening is denied by the access control means.
and/or a signal propagation time and/or a signal round trip time and/or a distance is determined on the basis of the time of the earliest reception and, if a predetermined signal propagation time and/or a signal round trip time and/or a predetermined distance and/or a predetermined deviation from the signal propagation time and/or signal round trip time and/or distance determined by another means or by means of another method is exceeded, access, entry and/or opening is denied by the access control means.

13. An access control system comprising an authorisation means and an access control means, the access control system comprising a transmission system arranged to transmit between the authorisation means and the access control means electrically, magnetically or electromagnetically at least a first plurality of symbols and/or chips having a first symbol or chip rate in at least a first analogue signal (AF), magnetically or electromagnetically at least a first plurality of symbols and/or chips having a first symbol or chip rate in at least a first analogue signal (AF) encoded from a first one of authorisation means and access control means to a second one of authorisation means and access control means and/or in at least a second analogue signal (RF) generated on the basis of the first analogue signal from a first one of authorisation means and access control means to a second one of authorisation means and access control means,
wherein the access control system is set up to determine a time of the earliest reception (27) of a signal change and/or a signal edge by means of one of the methods according to one of the preceding claims and, if a predetermined time deviation of a time of a data reception from the time of the earliest reception is exceeded and/or if the earliest reception deviates from a predetermined time window or a time window calculated by other methods, to deny access, an entry and/or an opening and/or to determine a signal propagation time and/or a signal round trip time and/or a distance on the basis of the time of the earliest reception and, if a predetermined signal propagation time and/or signal round trip time and/or a predetermined signal round trip time and/or a predetermined signal round trip time and/or a predetermined signal round trip time and/or a predetermined signal round trip time and/or a distance is exceeded, to deny access, an activation and/or an opening, and/or to determine a signal propagation time and/or signal round trip time and/or a distance on the basis of the time of the earliest reception and to deny access, entry, activation and/or opening if a predetermined signal propagation time and/or signal round trip time and/or distance is exceeded and/or if a predetermined deviation from the signal propagation time and/or signal round trip time and/or distance determined by another method or means is exceeded.

14. Use of a time of an earliest reception of a signal change and/or a signal edge for access control, authentication, distance measurement, synchronisation and/ or for detection and/or for defence against relay attacks, wherein by means of a transmission system at least a first plurality of symbols and/or chips with a first symbol or chip rate in at least one first analogue signal (NF) encoded from a first to a second object and/or in at least one second analogue signal (HF) generated on the basis of the first analogue signal are transmitted from a first to a second object, and a second plurality of samples (19) of the transmitted symbols and/or chips of said at least one first or second analogue signal at the second object, is used to detect the earliest reception of the signal change and/ or the signal edge of a symbol or chip changed from the preceding symbol or chip, wherein the time of the earliest reception (27) is chosen to be exceeds or falls below a value determined from a fourth plurality of samples of the first and/or second analogue signal or leaves a value range determined from the fourth plurality of samples of the first and/or second analogue signal and in particular at which the earliest of the second plurality of samples (26), in particular in the signal and/or chip period, or the earliest aggregated group from the second plurality of samples (26) which shows a statistically significant change lies,
wherein the second plurality of samples of the third plurality of transmitted symbols and/or chips is selected such that its samples are taken at symbols and/or chips transmitted at different times and lie at at least five, in particular at least ten different, in particular in each case offset by at least two percent of the symbol and/or chip period and/or framing at least ten, in particular at least 20, percent of the symbol and/or chip period, first time points in the symbol and/or chip period, the distance in the symbol and/or chip period between the first time points being in particular smaller than the smallest possible sampling interval of the second object of the transmission system, **characterised in that** samples of a fifth plurality of the transmitted symbols and/or chips of said at least one first or second analogue signal c second object are used as the fourth plurality of samples.

15. A transmission system comprising at least two objects, in each case having at least one antenna and altogether having at least one transmitter and one receiver and a computing and/or control unit as well as at least one memory and designed for transmitting a first plurality of symbols and/or chips with a first symbol or chip rate in at least one first analogue signal (NF) encoded from a first of the two objects to a second of the two objects and/or in at least one second analogue signal (HF) generated on the basis of the first analogue signal from a first of the two to a second of the two objects and designed for determining the moment (27) of an earliest reception of a signal change and/or a signal edge, in particular for time-of-flight measurement, in particular for distance measurement and/or synchronisation, in a (in particular symbol synchronised and/or digital) transmission system, the system being designed to use a second plurality of samples (19) of a third plurality of the transmitted symbols and/or chips of said at least one first or second analogue signal at the second object, in order to detect the earliest reception of the signal change and/or the signal edge of a symbol or chip which differs from the preceding symbol or chip, the time at which the earliest of the second plurality of samples (26) or the earliest aggregated group from the second plurality of samples (26) is located, in particular in the signal and/or chip period, being selected as the time of the earliest reception, which exceeds or falls below a value determined from a fourth plurality of samples of the first and/or second analogue signal or leaves a value range (24a, 24b) determined from a fourth plurality of samples of the first and/or second analogue signal, and in particular at which the earliest of the second plurality of samples (26) or the earliest aggregated group from the second plurality of samples (26) which shows a statistically significant change lies, in particular in the signal and/or chip period,
wherein the second plurality of samples of the third plurality of transmitted symbols and/or chips is selected such that its samples are taken at symbols and/or chips transmitted at different times and lie at at least five, in particular at least ten, different, in particular in each case offset by at least two percent of the symbol and/or chip period (22) and/or at least ten, in particular at least 20, percent of the symbol and/or chip period framing, first times in the symbol and/or chip period,
wherein the distance in the symbol and/or chip period of the first instants from one another is in particular smaller than the smallest possible sampling interval of the second object of the transmission system, **characterised in that** samples of a fifth plurality of the transmitted symbols and/or chips of said at least one first or second analogue signal at the second object are used as the fourth plurality of samples.

## Revendications

1. Procédé permettant de détecter l'instant (27) de la réception antérieure d'un changement de signal et/ou d'un front de signal, notamment pour la mesure du temps de propagation, en particulier pour la mesure de la distance et/ou la synchronisation, dans un système de transmission, en particulier un système de transmission synchronisé par symboles et/ou numérique,
dans lequel, au moyen du système de transmission, au moins une première pluralité de symboles et/ou de puces avec un premier taux de symboles ou de puces est transmise, codée dans au moins un premier signal analogique (NF) d'un premier à un deuxième objet et/ou dans au moins un deuxième signal analogique (HF) généré sur la base du premier signal analogique d'un premier à un deuxième objet,
dans lequel une deuxième pluralité d'échantillons (19) d'une troisième pluralité de symboles et/ou de fragments transmis du premier ou du deuxième signal analogique au niveau du deuxième objet est utilisée pour détecter la réception antérieure du changement de signal et/ou du front de signal d'un symbole ou d'un fragment différent du symbole ou du fragment précédent,
dans lequel l'instant où le premier de la deuxième pluralité d'échantillons (26) ou le premier groupe agrégé de la deuxième pluralité d'échantillons (26) est situé, en particulier dans la période du signal et/ou de la puce, est sélectionné comme l'instant de la réception antérieure,
qui dépasse ou tombe en dessous d'une valeur déterminée à partir d'une quatrième pluralité d'échantillons du premier et/ou du deuxième signal analogique ou qui quitte une valeur déterminée à partir d'une quatrième pluralité d'échantillons du premier et/ou du deuxième signal analogique, et en particulier à laquelle se trouve le premier de la deuxième pluralité d'échantillons (26), notamment dans la plage de valeurs (24a, 24b) du signal et/ou de la période de la puce, ou le premier groupe agrégé de la deuxième pluralité d'échantillons (26), qui présente un changement statistiquement significatif,
la deuxième pluralité d'échantillons de la troisième pluralité de symboles et/ou de jetons transmis est sélectionnée de telle sorte que leurs échantillons sont prélevés sur des symboles et/ou des jetons transmis à des instants différents et se situent à au moins cinq, notamment à au moins dix, différents, notamment dans chaque cas décalés d'au moins deux pour cent de la période de symbole et/ou de jeton (22) et/ou d'au moins dix, en particulier d'au moins 20 % de la période du symbole et/ou de la puce, en particulier d'au moins 20 % de la période du symbole et/ou de la puce, la distance dans la période du symbole et/ou de la puce entre les premiers points temporels étant en particulier plus petite que le plus petit intervalle d'échantillonnage possible du deuxième objet du système de transmission,
**caractérisé par le fait que** des échantillons d'une cinquième pluralité de symboles transmis et/ou de puces d'au moins un premier ou deuxième signal analogique au niveau du deuxième objet sont utilisés comme quatrième pluralité d'échantillons.

2. Procédé selon la revendication 1,
dans lequel les valeurs d'échantillonnage d'une cinquième pluralité de symboles et/ou de puces transmis dudit au moins un premier ou deuxième signal analogique utilisé au deuxième objet sont utilisées pour déterminer le niveau de signification et/ou la valeur ou la plage de valeurs déterminée, en particulier à partir de l'écart type ou de la largeur de la fluctuation ou de la dispersion de la quatrième pluralité de valeurs d'échantillonnage,
dans lequel le changement statistiquement significatif est supposé en particulier lorsque le changement est égal ou supérieur à x fois l'écart type de la quatrième pluralité d'échantillons, ou dans lequel la valeur déterminée est em moyenne ou médiane de la quatrième pluralité d'échantillons plus ou moins x fois la largeur de la variation à l'intérieur ou de la dispersion de la quatrième pluralité d'échantillons, ou dans lequel la plage de valeurs déterminées s'étend sur 2x fois la largeur de la variation à l'intérieur ou de la dispersion de la quatrième pluralité d'échantillons,
dans lequel x est notamment compris entre 0,4 et 5, notamment entre 0,5 et 3, notamment entre 1 et 3, et/ou
dans lequel des échantillons de la cinquième pluralité de symboles et/ou de puces transmis dudit au moins un premier ou deuxième signal analogique au deuxième objet sont utilisés comme quatrième pluralité d'échantillons, et la quatrième pluralité d'échantillons de la cinquième pluralité de symboles et/ou de puces transmis est sélectionnée de manière à ce que leurs valeurs d'échantillon soient prises sur des symboles et/ou des puces transmis à des instants différents et se situent à au moins cinq, en particulier au moins dix, différents, en particulier dans chaque cas décalés d'au moins deux pour cent de la période de symbole et/ou de puce et/ou d'au moins dix, en particulier au moins 20, pour cent de la période de symbole et/ou de puce encadrant des deuxièmes instants dans la période de symbole et/ou de puce,
dans lequel la distance entre les deuxièmes points temporels dans la période de symbole et/ou de puce est en particulier inférieure au plus petit intervalle d'échantillonnage possible du deuxième objet du système de transmission.

3. Procédé selon l'une des revendications précédentes, dans lequel la quatrième pluralité d'échantillons de la cinquième pluralité de symboles et/ou de puces transmis se situe dans une partie de la période du symbole et/ou de la puce au cours de laquelle au moins un premier et/ou un deuxième signal analogique est constant et/ou a un niveau constant.

4. Procédé selon l'une des revendications précédentes, dans lequel le niveau et/ ou l'amplitude et/ou la phase du premier ou du deuxième signal sont utilisés pour déterminer le changement, le niveau de signification, la largeur de la variation ou de l'écart et/ou la valeur prédéterminée et/ou la plage de valeurs et/ou le changement du niveau et/ou de l'amplitude et/ou de la phase du premier et/ ou du deuxième signal analogique reçu est utilisé comme changement dans le premier ou le deuxième signal analogique reçu ou dans les échantillons de celui-ci.

5. Procédé selon l'une des revendications précédentes, dans lequel le deuxième signal analogique est généré à partir du premier signal au moyen d'un mélange à haute fréquence et/ou le deuxième signal est d'une fréquence plus élevée que le premier et/ou dans lequel le premier signal est reconstitué autant que possible à partir du deuxième signal au niveau du deuxième objet avant l'échantillonnage, notamment par mélange.

6. Procédé selon l'une des revendications précédentes, dans lequel la deuxième pluralité est égale à la quatrième pluralité.

7. Procédé selon l'une des revendications précédentes, dans lequel le système de transmission est bidirectionnel et, en particulier, le procédé est appliqué dans les deux directions de transmission.

8. Procédé selon l'une des revendications précédentes, dans lequel les symboles et/ou les puces transmettent des informations au moins partiellement cryptées, en particulier des informations au moins partiellement cryptées sur l'évolution du premier et/ou du deuxième signal analogique et/ou des informations permettant de tirer des conclusions sur l'évolution du premier et/ou du deuxième signal analogique, et dans lequel ces conclusions sont tirées et utilisées au niveau du deuxième objet, par exemple pour sélectionner une ou plusieurs pluralités et/ou pour déterminer une ou plusieurs périodes de temps, sections et/ou points dans le temps.

9. Procédé selon l'une des revendications précédentes, dans lequel la deuxième et/ou la quatrième pluralité de valeurs échantillonnées se situent de manière équidistante dans la période de symbole et/ou de puce et/ou dans laquelle la deuxième et/ou la quatrième pluralité de valeurs échantillonnées se situent de manière équidistante dans le temps, leur espacement dans le temps étant choisi de manière à ce que leur position dans la période de symbole et/ou de puce soit répétée au plus tôt après cinq symboles et/ou puces, en particulier au plus tôt après dix symboles et/ou puces.

10. Procédé selon l'une des revendications précédentes, dans lequel la précision de synchronisation dans le système de transmission entre le premier et le deuxième objet, en particulier sans utiliser le procédé selon l'invention, est choisie de telle sorte que l'écart, en particulier des horloges, des chronomètres et/ou des mesures de temps, entre le premier et le deuxième objet est au plus égal à 50 % de la période du symbole et/ou de la puce, en particulier est compris entre 10 et 50 % de la période du symbole et/ou de la puce.

11. Procédé de détection et/ou de défense contre les attaques de relais, dans lequel un procédé selon les revendications précédentes est utilisé pour déterminer la réception antérieure d'un changement de signal et/ou d'un front de signal, et
a. lorsqu'un écart temporel prédéterminé entre l'heure de réception des données et l'heure de la réception antérieure est dépassé et/ou lorsque la réception antérieure s'écarte d'une fenêtre temporelle prédéterminée ou d'une fenêtre temporelle calculée selon d'autres procédés et/ou par
b. en cas de dépassement d'un délai de propagation du signal et/ou d'un temps d'aller-retour du signal et/ou d'une distance déterminée sur la base de l'heure de la réception antérieure et/ou de l'heure de la réception antérieure,
c. si un écart prédéterminé par rapport au temps de propagation du signal et/ou au temps d'aller-retour du signal et/ou à la distance déterminée par d'autres moyens ou par d'autres procédures est dépassé, une attaque de relais est détectée, des mesures sont prises pour se défendre contre l'attaque et/ou une instruction et/ou une authentification transmise notamment au moyen du signal reçu n'est pas exécutée et/ou n'est pas reconnue comme valide.

12. Procédé de sécurisation d'un système d'accès comprenant un moyen d'autorisation et un moyen de contrôle d'accès, dans lequel entre le moyen d'autorisation et le moyen de contrôle d'accès est transmise électriquement, magnétiquement ou électromagnétiquement au moins une première pluralité de symboles et/ou de puces avec un premier taux de symboles ou de puces, au moins une première pluralité de symboles et/ou de puces avec un premier taux de symboles ou de puces est transmise électriquement, magnétiquement ou électromagnétiquement entre lesdits moyens d'autorisation et lesdits moyens de contrôle d'accès dans au moins un premier signal analogique (AF) codé à partir d'un premier desdits moyens d'autorisation et desdits moyens de contrôle d'accès vers un deuxième desdits moyens d'autorisation et desdits moyens de contrôle d'accès et/ou dans au moins un deuxième signal analogique (RF) généré sur la base dudit premier signal analogique à partir d'un premier desdits moyens d'autorisation et desdits moyens de contrôle d'accès vers un deuxième desdits moyens d'autorisation et desdits moyens de contrôle d'accès au moyen d'un système de transmission,
dans lequel l'instant de la réception antérieure (27) d'un changement de signal et/ou d'un front de signal est déterminé au moyen de l'un des procédés selon l'une des revendications précédentes et, si un écart temporel prédéterminé entre l'instant de la réception d'une donnée et l'instant de la réception antérieure et/ou si la réception antérieure s'écarte d'une fenêtre temporelle prédéterminée ou d'une fenêtre temporelle calculée par d'autres procédés, l'accès, l'entrée, l'activation et/ou l'ouverture sont refusés par les moyens de contrôle d'accès,
et/ou un temps de propagation du signal et/ou un temps d'aller-retour du signal et/ou une distance sont déterminés sur la base de l'heure de la réception antérieure et, si un temps de propagation du signal et/ou un temps d'aller-retour du signal et/ou une distance prédéterminée et/ou un écart prédéterminé par rapport au temps de propagation du signal et/ou au temps d'aller-retour du signal et/ou à la distance déterminés par un autre moyen ou par un autre procédé sont dépassés, l'accès, l'entrée et/ou l'ouverture sont refusés par les moyens de contrôle d'accès.

13. Système de contrôle d'accès comprenant un moyen d'autorisation et un moyen de contrôle d'accès, le système de contrôle d'accès comprenant un système de transmission conçu pour transmettre entre le moyen d'autorisation et le moyen de contrôle d'accès électriquement, magnétiquement ou électromagnétiquement au moins une première pluralité de symboles et/ou de puces ayant un premier taux de symboles ou de puces dans au moins un premier signal analogique (AF), magnétiquement ou électromagnétiquement au moins une première pluralité de symboles et/ou de puces ayant un premier taux de symboles ou de puces dans au moins un premier signal analogique (AF) codé à partir d'un premier moyen d'autorisation et de contrôle d'accès vers un deuxième moyen d'autorisation et de contrôle d'accès et/ou dans au moins un deuxième signal analogique (RF) généré sur la base du premier signal analogique à partir d'un premier moyen d'autorisation et de contrôle d'accès vers un deuxième moyen d'autorisation et de contrôle d'accès,
dans lequel le système de contrôle d'accès est configuré pour déterminer l'instant de la réception antérieure (27) d'un changement de signal et/ou d'un front de signal au moyen de l'un des procédés selon l'une des revendications précédentes et, si un écart temporel prédéterminé entre un instant de réception de données et l'instant de la réception antérieure est dépassé et/ou si la réception antérieure s'écarte d'une fenêtre temporelle prédéterminée ou d'une fenêtre temporelle calculée par d'autres procédés, pour refuser l'accès, une entrée et/ou une ouverture et/ou pour déterminer un temps de propagation du signal et/ou un temps d'aller-retour du signal et/ou une distance sur la base de l'instant de la réception antérieure, et, si un temps de propagation du signal et/ou un temps d'aller-retour du signal et/ou un temps d'aller-retour du signal et/ou un temps d'aller-retour du signal et/ou un temps d'aller-retour du signal et/ou une distance prédéterminés sont dépassés, refuser l'accès, l'activation et/ou l'ouverture, et/ou de déterminer un temps de propagation du signal et/ou un temps d'aller-retour du signal et/ou une distance sur la base de l'instant de la réception antérieure et de refuser l'accès, l'entrée, l'activation et/ou l'ouverture si un temps de propagation du signal et/ou un temps d'aller-retour du signal et/ ou une distance prédéterminés sont dépassés et/ou si un écart prédéterminé par rapport au temps de propagation du signal et/ou au temps d'aller-retour du signal et/ou à la distance déterminés par un autre procédé ou d'autres moyens est dépassé.

14. Utilisation de l'instant de la réception antérieure d'un changement de signal et/ ou d'un front de signal pour le contrôle d'accès, l'authentification, la mesure de la distance, la synchronisation et/ou la détection et/ou la défense contre les attaques par relais, dans lequel, au moyen d'un système de transmission, au moins une première pluralité de symboles et/ou de puces avec un premier taux de symboles ou de puces dans au moins un premier signal analogique (NF) codé d'un premier à un deuxième objet et/ou dans au moins un deuxième signal analogique (HF) généré sur la base du premier signal analogique sont transmis d'un premier à un deuxième objet, et une deuxième pluralité d'échantillons (19) des symboles et/ou des puces transmis dudit au moins un premier ou un deuxième signal analogique au deuxième objet, est utilisé pour détecter la réception antérieure du changement de signal et/ou du front de signal d'un symbole ou d'une puce modifié(e) par rapport au symbole ou à la puce précédent(e), l'instant de la réception antérieure (27) étant choisi pour être supérieur ou inférieur à une valeur déterminée à partir d'une quatrième pluralité d'échantillons du premier et/ou du deuxième signal analogique ou pour sortir d'une plage de valeurs déterminée à partir de la quatrième pluralité d'échantillons du premier et/ou du deuxième signal analogique, et en particulier pour déterminer l'instant de la réception antérieure de la deuxième pluralité d'échantillons (26), en particulier dans la période du signal et/ou de la puce, ou le groupe agrégé antérieur de la deuxième pluralité d'échantillons (26) qui présente un changement statistiquement significatif,
dans laquelle la deuxième pluralité d'échantillons de la troisième pluralité de symboles et/ou de puces transmis est sélectionnée de telle sorte que ses échantillons sont prélevés sur des symboles et/ou des puces transmis à des instants différents et se situent à au moins cinq, notamment au moins dix, différents, notamment dans chaque cas décalés d'au moins deux pour cent de la période du symbole et/ou de la puce et/ou encadrant au moins dix, notamment au moins 20, pour cent de la période du symbole et/ou de la puce, des premiers points temporels dans la période de symbole et/ou de puce, la distance dans la période de symbole et/ou de puce entre les premiers points temporels étant en particulier plus petite que le plus petit intervalle d'échantillonnage possible du deuxième objet du système de transmission, **caractérisé par le fait que** des échantillons d'une cinquième pluralité de symboles et/ou de puces transmis dudit au moins un premier ou deuxième signal analogique au deuxième objet sont utilisés comme quatrième pluralité d'échantillons.

15. Système de transmission comprenant au moins deux objets, ayant chacun au moins une antenne et ayant ensemble au moins un émetteur et un récepteur et une unité de calcul et/ou de commande ainsi qu'au moins une mémoire et conçu pour transmettre une première pluralité de symboles et/ou de puces avec un premier débit de symboles ou de puces dans au moins un premier signal analogique (NF) codé d'un premier des deux objets vers un deuxième des deux objets et/ou dans au moins un deuxième signal analogique (HF) généré sur la base du premier signal analogique d'un premier des deux objets vers un deuxième des deux objets et conçu pour déterminer l'instant (27) de la réception antérieure d'un changement de signal et/ou d'un front de signal, en particulier pour la mesure du temps de vol, en particulier pour la mesure de la distance et/ou la synchronisation, dans un système de transmission, en particulier synchronisé par symboles et/ou numérique, le système étant conçu pour utiliser une deuxième pluralité d'échantillons (19) d'une troisième pluralité de symboles transmis et/ou de puces dudit au moins un premier ou deuxième signal analogique au niveau du deuxième objet, afin de détecter la réception antérieure du changement de signal et/ou du front de signal d'un symbole ou d'une puce qui diffère du symbole ou de la puce précédents, l'instant auquel se trouve antérieur de la deuxième pluralité d'échantillons (26) ou le groupe agrégé antérieur de la deuxième pluralité d'échantillons (26), en particulier dans la période du signal et/ou de la puce, étant sélectionné comme l'instant de la réception antérieure, qui dépasse ou tombe en dessous d'une valeur déterminée à partir d'une quatrième pluralité d'échantillons du premier et/ou du deuxième signal analogique ou qui sort d'une plage de valeurs (24a, 24b) déterminée à partir d'une quatrième pluralité d'échantillons du premier et/ou du deuxième signal analogique, et en particulier à laquelle se situe le premier de la deuxième pluralité d'échantillons (26) ou le premier groupe agrégé de la deuxième pluralité d'échantillons (26) qui présente un changement statistiquement significatif, en particulier dans la période du signal et/ou de la puce, dans lequel la deuxième pluralité d'échantillons de la troisième pluralité de symboles et/ou de puces transmis est sélectionnée de telle sorte que ses échantillons sont prélevés sur des symboles et/ou des puces transmis à des instants différents et se situent à au moins cinq, en particulier au moins dix, différents, en particulier dans chaque cas décalés d'au moins deux pour cent de la période de symbole et/ou de puce (22) et/ou d'au moins dix, en particulier au moins 20, pour cent de la période de symbole et/ou de puce encadrant, les premiers instants de la période de symbole et/ou de puce,
dans lequel la distance entre les périodes de symbole et/ou de puce des premiers instants est notamment inférieure au plus petit intervalle d'échantillonnage possible du deuxième objet du système de transmission, **caractérisé par le fait que** des échantillons d'une cinquième pluralité de symboles et/ou de puces transmis dudit au moins un premier ou deuxième signal analogique au deuxième objet sont utilisés en tant que quatrième pluralité d'échantillons.
